(19) Europäisches Patentamt / European Patent Office / Office européen des brevets

(11) **EP 2 891 669 A1**

(12) **EUROPEAN PATENT APPLICATION**
published in accordance with Art. 153(4) EPC

(43) Date of publication:
**08.07.2015 Bulletin 2015/28**

(21) Application number: **13833589.8**

(22) Date of filing: **06.08.2013**

(51) Int Cl.:
*C08F 290/06* (2006.01)    *C09D 5/00* (2006.01)
*C09D 7/12* (2006.01)    *C09D 183/04* (2006.01)
*C09D 201/00* (2006.01)

(86) International application number:
**PCT/JP2013/004745**

(87) International publication number:
**WO 2014/034030 (06.03.2014 Gazette 2014/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.08.2012 JP 2012187833**

(71) Applicant: **Bridgestone Corporation**
**Tokyo 104-8340 (JP)**

(72) Inventors:
• **ISHIHARA, Takenobu**
  **Kodaira-shi**
  **Tokyo 187-8531 (JP)**
• **AKAMA, Shuyou**
  **Kodaira-shi**
  **Tokyo 187-8531 (JP)**

(74) Representative: **Oxley, Robin John George**
**Marks & Clerk LLP**
**90 Long Acre**
**London WC2E 9RA (GB)**

(54) **MEMBER HAVING CURED LAYER FORMED BY CURING CURABLE RESIN COMPOSITION ON AT LEAST SURFACE THEREOF**

(57)    A member that, while maintaining water repellency and oil repellency, has an improved slidability (water-sliding property that allows for easy removal of water droplets on a surface) is provided.

The member according to the present invention having, at least on a surface thereof, a cured layer obtained by curing a curable resin composition includes, in an area within 1 nm in depth from an outermost surface of the cured layer, a fluorine element at 1.0 at% to 10.0 at% and a silicon element at 1.0 at% to 20.0 at%.

EP 2 891 669 A1

**Description**

TECHNICAL FIELD

The present invention relates to a member and, more specifically, to a member having, at least on a surface thereof, a cured layer obtained by curing a curable resin composition.

BACKGROUND

A functional panel serving as a construction material is disposed as a building wall, a floor, or a wall of a ceiling and, depending on a disposing location, various properties such as acoustic insulation and humidity control are imparted to the functional panel. Such a functional panel, particularly when used as a member for a wet-area such as a bathroom, a lavatory, and a kitchen in a house, is required to have various properties including water repellency, oil repellency, slidability and the like in order to withstand more severe use environments.

As such, it has been attempted to apply, to the surface of the member, a composition containing a low surface free energy compound having a low surface free energy incorporated therein and thus having reduced surface free energy, in order to impart excellent water repellency and stain repellency to the member. As such a low surface free energy compound, a hydrophobic material such as a fluorine-based compound, a silicone-based compound or the like has been used.

For example, Patent Document 1 (PTL1 set forth below) discloses a wet-area member having, on a surface thereof, a cured-coating material containing the low surface free energy compound, and further discloses a silicone resin compound and a fluorine resin compound serving as the low surface free energy compounds.

The use of the low surface free energy compound such as the silicone-based compound and the fluorine-based compound as described above allows for an improvement in the water repellency and the oil repellency.

However, there is a problem that, since the silicone-based compound does not have sufficiently low surface free energy, the oil repellency may not be imparted thereto and thus the silicone-based compound has low durability. On the other hand, there is a problem that, although the fluorine-based compound has excellent water repellency and oil repellency, the fluorine-based compound has low slidability of water droplets (water-slipping property) on the surface thereof due to a strong interaction between the water and the fluorine-based compound.

As such, in order to improve the properties of the surface, the use of a fluorine-containing silicone compound has been examined.

For example, Patent Document 2 (PTL2 set forth below) discloses a product having a layer containing a graft polymer of fluorine-based resin and silicone-based resin and a semiconductor photocatalyst formed on a surface of a substrate.

Also, Patent Document 3 (PTL3 set forth below) discloses a product having, on a surface thereof, a cured film obtained from a coating agent composition containing the fluorine-containing silicon compound.

Further, Patent Document 4 (PTL4 set forth below) discloses a substrate obtained by coating a surface thereof with a surface treatment agent containing an organic silicon compound as an active ingredient.

However, there has been a problem that, although the blending of a fluorine compound in a silicone compound, which is known as a material having high water repellency and slidability, allows for the obtainment of a material with higher water repellency, because of the length of a fluorine compound chain and a silicone compound chain in the composition, one of the fluorine compound and the silicone component is segregated predominantly on the surface, inhibiting the compatibility with the water repellency and the slidability.

CITATION LIST

Patent Literatures

PTL 1: Japanese Patent Application Laid-Open Publication No. 2002-69378
PTL 2: Japanese Patent Application Laid-Open Publication No. 10-237430
PTL 3: Japanese Patent Application Laid-Open Publication No. 2009-30039
PTL 4: Japanese Patent Application Laid-Open Publication No. 2000-144121

An object of the present invention is to provide a member that, while maintaining the water repellency and the oil repellency, may have an improved slidability (water-slipping property that allows for easy removal of water droplets on the surface).

## SUMMARY

That is, a member according to the present invention is a member having, at least on a surface thereof, a cured layer obtained by curing a curable resin composition, where a region within 1 nm in depth from an outermost surface of the cured layer includes a fluorine element at 1.0 at% to 10.0 at% and a silicon element at 1.0 at% to 20.0 at%.
According to the present invention, since the region within 1 nm in depth from the outermost surface of the cured layer includes the fluorine element at 1.0 at% to 10.0 at% and the silicon element at 1.0 at% to 20.0 at%, a member that, while maintaining water repellency and oil repellency, may have improved slidability may be provided.

## DETAILED DESCRIPTION

Hereinafter, the present invention will be described in detail.
Note that, in the present specification, (i) "a region within 1 nm in depth from an outermost surface of a cured layer" means "a region between the outermost surface of the cured layer and a portion of 1 nm in depth from the outermost surface of the cured layer", (ii) "an area over 1 nm to 5 nm or less in depth" means "an area between the portion of 1 nm in depth from the outermost surface of the cured layer and a portion of 5 nm in depth from the outermost surface of the cured layer (excluding the portion of 1 nm in depth from the outermost surface of the cured layer), (iii) "at%" means "a ratio of the number of atoms of a predetermined element to the number of all atoms excluding a hydrogen (H) atom and a helium (H) atom", (iv) "(meth) acryloyl" means "methacryloyl or acryloyl", and (v) "(meth) acrylate" means "methacrylate or acrylate".

(Member)

A member according to the present invention has the cured layer at least on a surface thereof and, as necessary, also includes a base layer and other layers. Here, the cured layer may be formed on both an upper surface and a rear surface of the base layer, or the cured layer and the base layer may be integrally formed such that the member functions as the cured layer in its entirety. That is, the "cured layer" is required to merely formed at least on the surface of the member (i.e., on the base layer (on the surface of the member) described below), or may form a substrate (i.e., forms as the entire member instead of being formed on the surface thereof).
Further, in both cases (i) when the "cured layer" is formed on the "base layer" ("when the cured layer is formed on the base layer as a coating layer") and (ii) when the "cured layer" forms the substrate (when the cured layer forms the entire member instead of being formed on the surface of the member) (that is, "when the cured layer forms the entire substrate by including a predetermined compound internally added thereto), a compound containing a fluorine element and a silicon element in one molecule (for example, FMV-4031 described later) may be used, or a fluorine-element-containing compound and a silicon-element-containing compound may be added separately. In both cases, however, it is preferable to separately add the fluorine-element-containing compound and the silicon-element-containing compound.
The member described above may be a wet-area member required to have water-drainage property on a surface thereof, a functional panel, and the like.
Although a thickness of the member is not particularly limited but may be appropriately selected based on a purpose, it is preferably typically 2.5 mm or more. A maximum thickness of the member is not particularly limited but may be appropriately selected based on the purpose.

< Cured layer >

The cured layer is a layer obtained by curing a curable resin composition, in which (i) concentration of each element in a region within 1 nm in depth from an outermost surface (i.e., an outermost surface of the member) and (ii) concentration of each element in a region over 1 nm to 5 nm or less in depth from the outermost surface are within predetermined ranges as described below. As long as being within the predetermined ranges, the concentration of each element may have a gradient.
The thickness of the cured layer is not particularly limited but may be appropriately selected based on the purpose, and preferably 1 $\mu$m to 500 $\mu$m.
The cured layer may be (A) a layer obtained by curing (i) a curable resin and (ii) a fluorine -containing compound and a silicon-containing compound and/or a compound including the fluorine element and the silicon element within one molecular, (B) a layer obtained by copolymerization of (i) the curable resin and (ii) a fluorine-element-containing compound including a reactive group (for example, an epoxy group, an acryloyl group, and a hydroxyl group) which reacts with the curable resin, a silicone-element-containing compound having the reactive group which reacts with the curable resin, and/or a compound including the reactive group which reacts with the curable resin and also including the fluorine element or the silicon element in one molecular (for example, FMV-4031 manufactured by Gelest Inc.), or (C) a layer obtained by curing, by means of, for example, thermal polymerization, a curable resin including the fluorine-containing compound and the silicon-containing compound and/or a compound including the fluorine element and the silicon element in one molecular, those compounds internally added to the curable resin.

Note that the "internal addition" means to internally add, for example, to a material such as FRP and the like, (i) a fluorine compound and a silicone compound and/or (ii) the compound including the fluorine element and the silicon element in one molecular.

When the cured layer is obtained by the copolymerization of (i) the curable resin and (ii) the fluorine-element-containing compound having the reactive group which reacts with the curable resin, the silicon-element-containing compound having the reactive group which reacts with the curable resin, and/or the compound having the reactive group which reacts with the curable resin and, simultaneously, including the fluorine element and the silicon element in one molecular, the compound including the fluorine element and the silicon element existing in the compound (ii) is segregated on the surface, thereby demonstrating property, and (i) the curable resin and the compound (ii) react with each other because of the reactive group, thereby further improving durability

Further, when the cured layer is obtained by curing the curable resin including the (i) fluorine-containing compound and the silicon-containing compound and/or (ii) the compound including the fluorine element and the silicon element within one molecular, those compounds internally added to the curable resin, the curable resin is cured while the low surface energy, i.e., (i) the fluorine-containing compound and the silicon-containing compound and/or (ii) the compound including the fluorine element and the silicon element in one molecular are segregated on the surface, whereby the cured layer may demonstrate the property thereof In this case, the member may be produced by, for example, a method of kneading, into a thermosetting resin (a base resin) serving as the substrate (a functional panel), (i) the fluorine-containing compound and the silicon-containing compound and/or (ii) the compound having the fluorine element and the silicon element in one molecular and curing (thermally polymerizing) thus obtained mixture. In this case, an entire member (an entire panel) forms the cured layer.

When the cured layer is cured by the thermal polymerization of the curable resin including (i) the fluorine-containing compound and the silicon-containing compound and/or (ii) the compound including the fluorine element and the silicon element in one molecular, those compounds internally added to the curable resin, the cured layer is cured while (i) the fluorine-containing compound and the silicon-containing compound and/or (ii) the compound including the fluorine element and the silicone element in one molecular are segregated on the surface, whereby the property of the cured layer may be further improved.

Here, the concentration of each element in the region within 1 nm in depth from the outermost surface (i.e., a region of approximately 0.5 to 1.0 nm in depth from the outermost surface) was measured by using an X-ray photoelectron spectroscopy (XPS) (Quantum 2000 produced by ULVAC-PHI, Inc.), under measurement conditions of (i) a detection angle (a taking-out angle) of 15 degrees, (ii) an X-ray type of AlK$\alpha$ line, and (iii) a beam condition of 100 $\mu$m in diameter, 20 W, and 15 kV For quantitative determination of each element, peaks of F1s, Si2p, C1s, O1s, and N1s were employed.

Also, the concentration of each element in the region over 1 nm to 5 nm or less in depth from the outermost surface (i.e., a region of approximately 1.5 to 4.0 nm in depth from the outermost surface) was measured by using the X-ray photoelectron spectroscopy (XPS) (Quantum 2000 produced by ULVAC-PHI, Inc.), under measurement conditions of (i) the detection angle (the taking-out angle) of 45 degrees, (ii) the X-ray type of AlK$\alpha$ line, and (iii) a beam condition of 100 $\mu$m in diameter, 20 W, and 15 kV For quantitative determination of each element, peaks of F1s, Si2p, C1s, O1s, and N1s were employed.

« Concentration of each element in region within 1 nm in depth from outermost surface »

- Fluorine element concentration -

Fluorine element concentration in the region within 1 nm in depth from the outermost surface of the cured layer is not particularly limited but may be appropriately selected based on the purpose as long as being at 1.0 at% to 10.0 at%, and is preferably 1.0 at% to 5.0 at%, more preferably 1.0 at% to 4.0 at%, particularly preferably 1.0 at% to 3.5 at%.

When the fluorine element concentration is under 1.0 at%, high water repellency and oil repellency derived from fluorine may not be demonstrated, and thus an effect of improving slidability while maintaining the water repellency and the oil repellency may not be sufficiently obtained. On the other hand, when the fluorine element concentration exceeds 10.0 at%, the surface is covered with fluorine atoms that are low polarity components, inhibiting the segregation of the silicon component on the surface necessary for an improvement in the slidability.

When the fluorine element concentration is within the preferable range, the more preferable range, or the particularly preferable range described above, it is advantageous in maintaining the high water repellency and oil repellency derived from fluorine and, simultaneously, causing no inhabitation of the segregation of the silicon on the surface.

- Silicon element concentration -

Silicon element concentration in the region within 1 nm in depth from the outermost surface is not particularly limited but may be appropriately selected based on the purpose as long as being at 1.0 at% to 20.0 at%, and is preferably 5.0 at% to 20.0 at%, more preferably 5.0 at% to 15.0 at%, particularly preferably 10.0 at% to 15.0 at%.

When the silicon element concentration is under 1.0 at%, the effect of improving the slidability while maintaining the water repellency and the oil repellency may not be sufficiently obtained. On the other hand, when the silicon element concentration exceeds 20.0 at%, the surface is covered with a low surface energy component originated from the silicon compound, thereby inhibiting the segregation of a fluorine component on the surface necessary for demonstrating the high water repellency and oil repellency.

When the silicon element concentration is within the preferable range, the more preferable range, or the particularly preferable range described above, it is advantageous in maintaining the high slidability derived from the silicon compound and, simultaneously, causing no inhabitation of the segregation of fluorine on the surface.

Further, the silicon element is preferably derived from silicone (i.e., a dimethyl siloxane group), in terms of excellent segregation of a low surface energy component derived from a dimethyl group on the surface. That is, when the silicon element is derived from silicone (i.e., the dimethyl siloxane group), the surface is covered with the methyl group derived from the dimethyl siloxane group, lowering the surface energy. As a result, the water repellency and the water-slipping property may be further improved.

- Concentration of fluorine element and silicon element -

In the member of the present invention, when the region within 1 nm in depth from the outermost surface of the cured layer includes the fluorine element at 1.0 at% to 10.0 at% and the silicon element at 1.0 at% to 20.0 at%, the water repellency and the oil repellency may be maintained and, simultaneously, the slidability may be improved.

- Atomic percentage ratio (element concentration ratio) (F/Si) of fluorine element and silicon element -

In the region within 1 nm in depth from the outermost surface of the cured layer, an atomic percentage ratio (an element concentration ratio) (F/Si) of the fluorine element and the silicon element is not particularly limited but may be appropriately selected based on the purpose, and preferably 1 or less, more preferably 0.05 to 1, particularly preferably 0.1 to 0.4.

When the atomic percentage ratio (F/Si) of the fluorine element and the silicon element is greater than 1, the characteristics based on the fluorine element becomes too dominant, possibly inhibiting the improvement in the slidability. On the other hand, when the atomic percentage ratio (F/Si) of the fluorine element and the silicon element is within the more preferable range or the particularly preferable range described above, it is advantageous in allowing for an improvement in the slidability while maintaining the oil repellency based on the fluorine element.

That is, when the atomic percentage ratio (F/Si) of the fluorine element and the silicon element is within the preferable range, the characteristics based on the fluorine element is prevented from becoming too dominant and the slidability may be further improved. Also, when the atomic percentage ratio (F/Si) of the fluorine element and the silicon element is within the more preferable range or the particularly preferable range, the oil repellency based on the fluorine element may be sufficiently maintained and, simultaneously, the slidability may be further improved to be better than that in using silicone alone, because of a synergistic effect of fluorine and silicone.

- Carbon element concentration -

Carbon element concentration in the region within 1 nm in depth from the outermost surface of the cured layer is not particularly limited but may be appropriately selected based on the purpose, and may be within a range of 30.0 at% to 70.0 at% in a normal cured layer.

- Oxygen element concentration -

Oxygen element concentration in the region within 1 nm in depth from the outermost surface of the cured layer is not particularly limited but may be appropriately selected based on the purpose, and may be within a range of 10.0 at% to 35.0 at% in the normal cured layer.

- Concentration of other elements -

The region within 1 nm in depth from the outermost surface of the cured layer may include, as components (the base resin, the initiator, other additives, and impurities) of the curable resin described later, other elements (for example, nitrogen (N), chlorine (Cl), phosphorus (P) and the like). Such other elements may be included within a range (approximately 5.0 at% or less) not inhibiting the purpose of the present invention (not having an impact on surface characteristics).

« Concentration of each element in region over 1 nm to 5 nm or less in depth from outermost surface »

- Fluorine element concentration -

Generally, since the fluorine element is segregated on the surface of the cured layer, fluorine element concentration in the region over 1 nm to 5 nm or less in depth from the outermost surface of the cured layer tends to be smaller than that in the region within 1 nm in depth from the outermost surface of the cured layer.
The fluorine element concentration in the region over 1 nm to 5 nm or less from the outermost surface of the cured layer is not particularly limited but may be appropriately selected based on the purpose, and preferably 1.0 at% to 5.0 at%, more preferably 1.0 at% to 4.0 at%, particularly preferably 1.0 at% to 3.0 at%.
When the fluorine element concentration is under 1.0 at%, characteristics thereof may not be maintained (the durability may not be demonstrated) when the outermost surface is worn away, possibly inhibiting the sufficient effect of improving the slidability while maintaining the water repellency and the oil repellency. On the other hand, when the fluorine element concentration exceeds 5.0 at%, the effect described above becomes saturated, possibly inhibiting the obtainment of a better effect of surface improvement.
When the fluorine element concentration is within the more preferable range or the particularly preferable range described above, it is advantageous in causing no inhabitation of the segregation of the silicon on the surface while maintaining the high water repellency and the high oil repellency derived from fluorine.

- Silicon element concentration -

Generally, since the silicon element is segregated on the surface of the cured layer, silicon element concentration in the region over 1 nm to 5 nm or less in depth from the outermost surface of the cured layer tends to be less than that in the region within 1 nm in depth from the outermost surface of the cured layer.
The silicon element concentration in the region over 1 nm to 5 nm or less in depth from the outermost surface of the cured layer is not particularly limited but may be appropriately selected based on the purpose, and preferably 1.0 at% to 15.0 at%, more preferably 1.0 at% to 10.0 at%, particularly preferably 3.0 at% to 10.0 at%.
When the silicon element concentration is under 1.0 at%, characteristics thereof may not be maintained (the durability may not be demonstrated) when the outermost surface is worn away, possibly inhibiting the sufficient effect of improving the slidability while maintaining the water repellency and the oil repellency. On the other hand, when the fluorine element concentration exceeds 15.0 at%, the effect described above becomes saturated, possibly inhibiting the obtainment of a better effect of the surface improvement.
When the silicon element concentration is within the more preferable range or the particularly preferable range described above, it is advantageous in causing no inhabitation of the segregation of fluorine on the surface while maintaining the high water-slippering property derived from the silicon compound.
Further, the silicon element is preferably derived from silicone (the dimethyl siloxane group), it is preferable from the viewpoint of excellent segregation of the low surface energy component derived from the dimethyl group on the surface. That is, when the silicon element is derived from the silicone (the dimethyl siloxane group), the surface is covered with the methyl group derived from the dimethyl siloxane group, lowering the surface energy. As a result, the water repellency and the water-slipping property may be further improved.

- Concentration of fluorine element and silicon element -

In the member of the present invention, when the region over 1 nm to 5 nm or less in depth from the outermost surface of the cured layer includes the fluorine element at 1.0 at% to 5.0 at% and the silicon element at 1.0 at% to 15.0 at%, the slidability may be further improved the water repellency and the oil repellency are sufficiently maintained.

- Atomic percent ratio (element concentration ratio) (F/Si) of fluorine element and silicon element -

In the region over 1 nm to 5 nm or less in depth from the outermost surface of the cured layer, the atomic percentage ratio (the element concentration ratio) (F/Si) of the fluorine element and the silicon element is preferably 1 or less, more preferably 0.05 to 1, particularly preferably 0.1 to 0.4.
When the atomic percentage ratio (F/Si) of the fluorine element and the silicon element is greater than 1, the characteristics based on the fluorine element becomes too dominant, possibly inhibiting the improvement in the slidability. On the other hand, when the atomic percentage ratio (F/Si) of the fluorine element and the silicon element is within the more preferable range or the particularly preferable range, the silicon element and the fluorine element may be contained in a well-balanced manner, which is advantageous in allowing the improvement in the slidability while maintaining the oil repellency.

Also, when the atomic percentage ratio (F/Si) in the region over 1 nm to 5 nm or less in depth from the outermost surface of the cured layer is similar to that in the region within 1 nm in depth from the outermost surface of the cured layer, the effect of improving the slidability while maintaining the water repellency and the oil repellency may be demonstrated even when the surface is worn away.

- Carbon element concentration -

Carbon element concentration in the region over 1 nm to 5 nm or less in depth from the outermost surface of the cured layer is not particularly limited but may be appropriately selected based on the purpose, and is within a range of 10.0 at% to 80.0 at% in the normal cured layer.

- Oxygen element concentration -

Oxygen element concentration in the region over 1 nm to 5 nm or less in depth from the outermost surface of the cured layer is not particularly limited but may be appropriately selected based on the purpose, and is within a range of 10.0 at% to 40.0 at% in the normal cured layer.

- Concentration of other elements -

The region over 1 nm to 5 nm or less in depth from the outermost surface of the cured layer may include, as the components (the base resin, the initiator, other additives, and the impurities) of the curable resin described later, other elements (for example, nitrogen (N), chlorine (Cl), phosphorus (P) and the like). Such other elements may be included within a range (approximately 5.0 at% or less) not inhibiting the purpose of the present invention (not having an impact on the surface characteristics).

< Curable resin composition >

The curable resin composition is not particularly limited but may be appropriately selected based on the purpose, and may be, for example, a thermally-polymerizable resin composition, a photopolymerizable resin composition, a dual-curable compound that may react in both heat and light, or mixtures thereof

Here, the thermally-polymerizable resin composition means a resin composition that is cured by polymerization initiated by heat, and the photopolymerizable resin composition means a resin composition that is cured by polymerization initiated by the light. Depending on whether the curable resin composition is the thermally-polymerizable resin composition or the photopolymerizable resin composition, a polymerization initiator described later is appropriately selected.

When the curable resin composition is the thermally-polymerizable resin composition and/or the photopolymerizable resin composition, the curable resin is cured while the fluorine and silicone of low surface energy are segregated on the surface. Therefore, the property of the cured layer may be improved. In this case, the member may be produced by, for example, a method of coating and curing (by light irradiation and/or heating) of the resin composition on the surface of the substrate such as the FRP and the like.

A component of the curable resin composition is not particularly limited but may be appropriately selected based on the purpose, and may be, for example, the curable resin (the base resin), additives, the polymerization initiator, other components, or the like.

« Curable resin (base resin) »

The curable resin (the base resin) is not particularly limited but may be appropriately selected based on the purpose, and may be, for example, a resin including an oligomer, a monomer, or an additive component (the fluorine compound and the silicone compound) internally added thereto, thermosetting resin made of the base resin alone (100% base resin), thermosetting resin containing the base resin and a diluent, or the like. From the viewpoint of compatibility, those resins preferably have low polarity.

Also, although the oligomer or the monomer may be used alone, a combination of the oligomer and the monomer is preferably used.

A mass ration of blending amounts of the oligomer and the monomer is in a range of 100:0 to 0:100, preferably in a range of 80:20 to 20:80, and preferably in a range of 30:70 to 70:30. When the blending amount of the monomer is too small, viscosity of the curable resin composition obtained is increased, possibly compromising coating property, as well as deteriorating reactivity due to high functional group equivalent weight. On the other hand, when the blending amount of the monomer is too large, there is a tendency that flexibility of a coating film is lowered and brittleness is increased.

- Oligomer -

The oligomer is not particularly limited but may be appropriately selected based on the purpose, and may be, for example, (i) a radical polymerizable reactive group such as (meth) acrylate oligomer (hereinafter, also referred to as "photopolymerizable oligomer") having at least one (meth) acryloyloxy group [$CH_2$=CHCOO- or $CH_2$=C($CH_3$)COO-], or the like.

-- (Meth) acrylate oligomer (photopolymerizable oligomer) --

(Meth) acrylate oligomer described above is not particularly limited but may be appropriately selected based on the purpose, and preferably (meth) acrylate oligomer having a 1,2-polybutylene oxide unit. Since the (meth) acrylate oligomer having the 1,2-polybutylene oxide unit has low polarity and thus excellent compatibility with the fluorine compound and the silicon compound as the low surface energy, the fluorine compound and the silicon compound as the low surface energy may be added over a wide range. Therefore, even when the fluorine compound and the silicon compound as the low surface energy in great amounts are added, cloudiness, layer separation and the like may be suppressed and uniformity of characteristics after curing may be achieved. Also, the appearance of the coating film becomes good, allowing a member using the coating film to have excellent physical properties and appearance. Further, since the resin obtained by curing the photocurable resin composition has high hydrophobicity, the cured layer becomes highly resistant against the water, the cured layer is hardly stained with cleaner used in the wet area and colorant such as hair colorant. Therefore, long-term stability of the water-slippering property is further improved.

Further, the low polarity of (meth) acrylate oligomer mentioned above may be specifically represented by a value of n-heptane tolerance, and the value is preferably 0.5 g/10 g or more, preferably 0.7 g/ 10 g or more. Note that the n-heptane tolerance means a value of a quantity (g) of n-heptane that may be added in a dripping manner to the resin of 10 g maintained at 25 °C until the resin becomes clouded. This value serves as an index of solubility in an organic solvent and, the larger the value is, the lower the polarity.

(Meth) acrylate oligomer described above is not particularly limited but may be appropriately selected based on the purpose, and may be, for example, urethane (meth) acrylate oligomer, epoxy (meth) acrylate oligomer, ether (meth) acrylate oligomer, ester (meth) acrylate oligomer, polycarbonate (meth) acrylate oligomer, silicone (meth) acrylate oligomer, or the like. These (meth) acrylate oligomers may be synthesized by reacting polyethylene glycol, polyoxypropylene glycol, polytetramethylene ether glycol, bis-phenol A epoxy resin, phenol novolak epoxy resin, or an adduct of polyhydric alcohol and ε-caprolactone with (meth) acrylic acid, or by urethanization of a (meth) acrylate compound including a polyisocyanate compound and a hydroxyl group.

Although the photopolymerizable oligomer may be any one of a monofunctional oligomer, a bifunctional oligomer, and a multifunctional oligomer, from the viewpoint of achieving a suitable crosslink density of the photocurable resin composition obtained, the multifunctional oligomer is preferable.

Among the photopolymerizable oligomers, from the viewpoint of imparting preferable properties as the member, urethane (meth) acrylate oligomer having excellent chemical resistance is preferable.

The urethane (meth) acrylate oligomer may be produced by, for example, synthesizing urethane prepolymer from (i) polyol and (ii) polyisocyanate, and adding, to the urethane prepolymer, (iii) a compound having a functional group reactable with isocyanate, e.g., (meth) acrylate having a hydroxyl group.

-- (i) Polyol --

Polyol used for the synthesis of the urethane prepolymer, as long as being a compound having a plurality of hydroxyl groups (-OH), is not particularly limited but may be appropriately selected based on the purpose, and may be, for example, polyether polyol, polyester polyol, polytetramethylene glycol, polybutadiene polyol, alkylene oxide-modified polybutadiene polyol, polyisoprene polyol, or the like. These polyol may be used alone or in combination with one or more thereof

Polyether polyol described above may be obtained by addition polymerization and, for example, by adding alkylene oxide such as ethylene oxide and propylene oxide to polyhydric alcohol such as ethylene glycol, propylene glycol, glycerol, trimethylolpropane, pentaerythritol, sorbitol, and the like. Or, polyether polyol may be obtained by ring-opening polymerization. Polyether polyol described above is not particularly limited but may be appropriately selected based on the purpose, and may be, for example, polytetramethylene glycol obtained by ring-opening polymerization of tetrahydrofuran (THF), or the like.

Polyester polyol described above may be obtained by the addition polymerization and, for example, from a combination of polyhydric alcohol such as ethylene glycol, diethylene glycol, 1,4-butanediol, 1,6-hexanediol, propylene glycol, trimethylolethane, trimethylolpropane, or the like and polyvalent carboxylic acid such as adipic acid, glutaric acid, succinic acid, sebacic acid, pimelic acid, suberic acid, or the like. Or, polyester polyol may be obtained by the ring-opening polymerization. Polyester polyol described above is not particularly limited but may be appropriately selected based on the purpose, and may be, for example, lactone-based polyester polyol obtained by the ring-opening polymerization of ε-caprolactone.

By using butylene oxide-modified polyol as the (i) polyol, (meth) acrylate oligomer having the 1,2-polybutylene oxide unit may be produced. The butylene oxide-modified polyol is polyether polyol obtained by, in the presence of an alkali catalyst, addition polymerization of butylene oxide (BO) to the polyhydric alcohol. Or, polyetherpolyol may be obtained by addition polymerization of 1,2-butylene oxide (BO) as well as another alkylene oxide such as propylene oxide (PO) and the like at the same time. In this case, a molar ratio of 1,2-butylene oxide (BO) to another alkylene oxide is 20:80 to 100:0, preferably 50:50 to 100:0. Number-average molecular weight of these butylene oxide-modified polyols obtained by using GPC is usually 100 to 15000, preferably 500 to 5000.

-- (ii) Polyisocyanate --

Polyisocyanate described above is not particularly limited as long as being a compound having a plurality of isocyanate groups (-NCO) but may be appropriately selected based on the purpose, and may be, for example, tolylene diisocyanate (TDI), diphenylmethane diisocyanate (MDI) , crude diphenylmethane diisocyanate (crude MDI), isophorone diisocyanate (IPDI), hydrogenated diphenylmethane diisocyanate, hydrogenated tolylene diisocyanate, hexamethylene diisocyanate (HDI), isocyanurate-modified products of the above compounds, carbodiimide-modified products of the above compounds, glycol-modified products of the above compounds, or the like. These compounds may be used alone, or in combination with one or more thereof.

-- Urethanization reaction catalyst --

In the synthesis of urethane prepolymer described above, an urethanization reaction catalyst is preferably used. The urethanization reaction catalyst is not particularly limited but may be appropriately selected based on the purpose, and may be, for example, an organic tin compound such as dibutyltin dilaurate, dibutyltin diacetate, dibutyltin thiocarboxylate, dibutyltin dimaleate, dioctyltin thiocarboxylate, octenoic acid tin, monobutyltin oxide, and the like; an inorganic tin compound such as stannous chloride, an organolead compound such as octenoic acid lead, cyclic amine such as triethylenediamine; organic sulfonic acid such as p-toluenesulfonic acid, methanesulfonic acid, fluorosulfuric acid and the like; inorganic acid such as sulfuric acid, phosphoric acid, perchloric acid and the like; bases such as sodium alcoholate, lithium hydroxide, aluminum alcoholate, sodium hydroxide and the like; a titanium compound such as tetrabutyl titanate, tetraethyl titanate, tetra-isopropyl titanate and the like; a bismuth compound; quaternary ammonium salt; or the like. These catalysts may be used alone or in combination with one or more thereof

Among them, the organic tin compound is preferable.

An amount of the urethanization reaction catalyst is not particularly limited but may be appropriately selected based on the purpose, and preferably 0.001 parts by mass to 2.0 parts by mass with respect to 100 parts by mass of polyol.

-- (iii) Compound having functional group reactable with isocyanate --

(iii) The compound having a functional group reactable with isocyanate added to urethane prepolymer is a compound having at least one functional group (e.g., the hydroxyl group) reactable with isocyanate and also having at least one of a photopolymerizable functional group ((meth) acryloyloxy group [$CH_2$=CHCOO- or $CH_2$=C($CH_3$)COO-]).

(iii) The compound having the functional group reactable with isocyanate may be added to the isocyanate group of urethane prepolymer described above.

(iii) The compound having the functional group reactable with isocyanate is not particularly limited but may be appropriately selected based on the purpose, and may be, for example, 2-hydroxyethyl (meth) acrylate, 2-hydroxypropyl (meth) acrylate, pentaerythritol tri (meth) acrylate, 2-hydroxyethyl vinyl ether, diethylene glycol monovinyl ether, 4-hydroxybutyl vinyl ether, 3-ethyl-3-hydroxymethyl-oxetane, 2-(meth) acryloyloxyethyl succinate, phthalate monohydroxyethyl (meth) acrylate, acrylic acid ester having a side chain formed of 1-aminoethyl group, (meth) acrylic acid ester having a side chain formed of 1-aminopropyl group, or the like. These compounds may be used alone or in combination with one or more thereof

The blending of the photopolymerizable oligomer as described above allows for optimization of glass transition temperature of the cured layer obtained by curing the curable resin composition. Thereby, the curable resin composition capable of demonstrating excellent slidability may be obtained.

-- Monomer --

The monomer described above is not particularly limited but may be appropriately selected based on the purpose, and may be, for example, (i) (meth) acrylate monomer (hereinafter, also referred to as a "photopolymerizable monomer") as the photopolymerizable monomer having at least one radical polymerizable reactive group such as, for example, (meth) acryloyloxy group [$CH_2=CHCOO-$ or $CH_2=C(CH_3)COO-$]. The monomer may be any one of (i) a monofunctional monomer, (ii) a bifunctional monomer, and (iii) a multifunctional monomer.

-- Photopolymerizable monomer --

The photopolymerizable monomer may be used alone or in combination with one or more thereof An SP value described below in using two or more different photopolymerizable monomers means a value obtained by multiplying the SP value of each monomer by each blending ratio (a ratio of each monomer to a total amount of the monomers represented by 1) and adding thus obtained values. For example, when, with respect to the total amount of the photopolymerizable monomer represented by 1, a photopolymerizable monomer having the SP value of 19.0 at the ratio of 3/4 and a photopolymerizable monomer having the SP value of 21.0 at the ratio of 1/4 are blended, the SP value of all used photopolymerizable monomers may be obtained from the following formula (X):

$$\text{SP value of photopolymerizable monomers} = (19.0 \times 3/4) + (21.0 \times 1/4) = 19.5 \ldots (X)$$

--- (i) Monofunctional monomer ---

(i) The monofunctional monomer described above is not particularly limited but may be appropriately selected based on the purpose, and may be, for example, isobornyl (meth) acrylate, bornyl (meth) acrylate, tricyclodecanyl (meth) acrylate, dicyclopentanyl (meth) acrylate, dicyclopentenyl (meth) acrylate, cyclohexyl (meth) acrylate, benzyl (meth) acrylate, 4-butylcyclohexyl (meth) acrylate, (meth) acryloylmorpholine, 2-hydroxyethyl (meth) acrylate, 2-hydroxypropyl (meth) acrylate, 2-hydroxybutyl (meth) acrylate, methyl (meth) acrylate, ethyl (meth) acrylate, propyl (meth) acrylate, isopropyl (meth) acrylate, butyl (meth) acrylate, isobutyl (meth) acrylate, t-butyl (meth) acrylate, pentyl (meth) acrylate, isoamyl (meth) acrylate, hexyl (meth) acrylate, heptyl (meth) acrylate, octyl (meth) acrylate, isooctyl (meth) acrylate, 2-ethylhexyl (meth) acrylate, nonyl (meth) acrylate, decyl (meth) acrylate, isodecyl (meth) acrylate, undecyl (meth) acrylate, dodecyl (meth) acrylate, lauryl (meth) acrylate, stearyl (meth) acrylate, myristyl (meth) acrylate, palmityl (meth) acrylate, isostearyl (meth) acrylate, tetrahydrofurfuryl (meth) acrylate, butoxyethyl (meth) acrylate, ethoxy diethylene glycol (meth) acrylate, polyoxyethylene nonylphenyl ether acrylate, phenoxyethyl (meth) acrylate, polyethylene glycol mono (meth) acrylate, polypropylene glycol mono (meth) acrylate, methoxy ethylene glycol (meth) acrylate, ethoxyethyl (meth) acrylate, methoxy polyethylene glycol (meth) acrylate, methoxy polypropylene glycol (meth) acrylate, dimethylaminoethyl (meth) acrylate, diethylaminoethyl (meth) acrylate, 7-amino-3,7-dimethyloctyl (meth) acrylate, or the like. These mono functional monomers may be used alone or in combination with one or more thereof.

--- (ii) Bifunctional monomer ---

(ii) The bifunctional monomer is not particularly limited but may be appropriately selected based on the purpose, and may be, for example, ethylene glycol di (meth) acrylate, tetraethylene glycol di (meth) acrylate, triethylene glycol di (meth) acrylate, 1,4-butanediol di (meth) acrylate, 1,6-hexanediol di (meth) acrylate, 1,9-nonanediol di (meth) acrylate, neopentyl glycol di (meth) acrylate, tris (2-hydroxyetyl) isocyanurate di (meth) acrylate, tricyclodecane dimethanol di (meth) acrylate, dimethylol tricyclodecane di (meth) acrylate, di (meth) acrylate of alkylene-oxide-addition diol of bisphenol A, di (meth) acrylate of alkylene-oxide-addition diol of hydrogenated bisphenol A, epoxy (meth) acrylate including (meth) acrylate added to diglycidyl ether of bisphenol A, or the like. These bifunctional monomers may be used alone or in combination with one or more thereof

--- (iii) Multifunctional monomer ---

(iii) The multifunctional monomer is not particularly limited but may be appropriately selected based on the purpose, and may be, for example, trimethylolpropane tri (meth) acrylate, ethoxylated trimethylolpropane tri (meth) acrylate, propoxylated trimethylolpropane tri (meth) acrylate, pentaerythritol tri (meth) acrylate, pentaerythritol tetra (meth) acrylate, dipentaerythritol hexa (meth) acrylate, ditrimethylolpropane tetra (meth) acrylate, dipentaerythritol monohydroxy penta (meth) acrylate, or the like. These multifunctional monomers may be used alone or in combination with two or more thereof

The solubility parameter (the SP value) of the photopolymerizable monomer is not particularly limited but may be appropriately selected based on the intended purpose, and preferably 20.0 $(J/cm^3)^{0.5}$ or less, more preferably 19.6 $(J/cm^3)^{0.5}$ or less. A minimum SP value is not particularly limited but is preferably typically at least 17.0 $(J/cm^3)^{0.5}$. When the SP value is low, the compatibility with the oligomer and the fluorine compound and the silicon compound as the low surface energy is improved, allowing the addition of the oligomer and the fluorine compound and the silicon compound as the low surface energy over a wide range. Accordingly, when the oligomer and the fluorine compound and the silicon compound as the low surface energy in great amounts are added, the cloudiness, the layer separation and the like may be suppressed. Further, an appearance after curing is improved, allowing a material using the cured layer to have an excellent appearance.

Here, the SP value ($\delta$), generally by using molar evaporation energy ($\Delta Ev$) of liquid and a molar volume (V), is defined by the following equation:

$$SP\ value\ (\delta) = (\Delta Ev/V)^{0.5}$$

Further, the SP value, according to Fedors method, may be estimated from a chemical structure alone (see "Solubility parameter values", Polymer Handbook, Fourth Edition (edited by J.Brandrup and others). Note that, in the present specification, the SP value means a value calculated by using the Fedors method, and the lower value is, the lower the polarity of the photopolymerizable monomer is.

Also, the photopolymerizable monomer is preferably a monomer represented by the following general formula (A):

$$(CH_2=CR^1COO)_nR^2 \qquad general\ formula\ (A)$$

In the general formula (A), the $R^1$ represents a hydrogen atom or a methyl group, the $R^2$ represents an n-valent hydrocarbon group having 5 to 20 carbon atoms that does not include a hetero atom and may be chainlike or annular. Also, $-CH_2-$ in the group may be replaced by $-CH=CH-$. Further, n is an integer of 1 to 4.

That is, in the general formula (A), provided that the photopolymerizable monomer is, for example, a chainlike saturated monomer, when n=1 is satisfied, the $R^2$ represents an alkyl group having 5 to 20 carbon atoms and, when n=2 is satisfied, the $R^2$ represents an alkylene group having 5 to 20 carbon atoms. Further, provided that the photopolymerizable monomer is a chainlike saturated monomer, when n=3 is satisfied, the $R^2$ represents an alkanetriyl group having 5 to 20 carbon atoms and, when n=4 is satisfied, the $R^2$ represents an alkane tetrayl group having 5 to 20 carbon atoms. Such $R^2$ may be, for example, an alkyl group such as $-CH_2CH_3$, $-CH_2CH_2CH_3$, $-CH(CH_3)CH_3$, a cyclohexyl group, a cycloheptane group, a cyclooctane group, a cyclononane group, a cyclodecane group and the like; an alkylene group such as $-CH_2CH_2-$, $-CH_2CH_2CH_2-$, $-CH(CH_3)CH_2-$ and the like; an alkanetriyl group represented by $CH_3CH_2C(CH_2-)_3$, or an alkanetetrayl group represented by $C(CH_2-)_4$.

When the $R^2$ has less than 5 carbon atoms, there is a tendency that, for a chainlike hydrocarbon group, the SP value of the monomer increases, lowering the compatibility with the oligomer and the fluorine compound and the silicon compound as the low surface energy, while the obtainment of the cyclic hydrocarbon group becomes simply difficult. On the other hand, when the $R^2$ has more than 20 carbon atoms, there is a tendency that the crosslinking density of a photocurable composition obtained decreases. In case of a decrease in the crosslinking density more than necessary, the colorant such as the hair colorant easily leaches into the cured layer, possibly staining the panel.

In particular, the monomer represented by the general formula (A) may be, for example, isobornyl (meth) acrylate, 1,6-hexanediol di (meth) acrylate, dimethylol tricyclodecane di (meth) acrylate, isoamyl (meth) acrylate, lauryl (meth) acrylate, tridecyl (meth) acrylate, isomyristyl (meth) acrylate, stearyl (meth) acrylate, 3-methyl-1,5-pentanediol di (meth) acrylate, neopentyl glycol di (meth) acrylate, cyclohexane dimethanol di (meth) acrylate, 1,9-nonanediol di (meth) acrylate, trimethylolpropane tri (meth) acrylate, pentaerythritol tetra (meth) acrylate, or the like.

Among them, from the point of view of having a tendency to demonstrate excellent low polarity because of having a more preferable SP value and being capable of further improving the compatibility with (A) dimethyl silicone (meth) acrylate oligomer and (D) the fluorine compound as well as further improving the chemical resistance and the stain resistance, 1,9-nonanediol di (meth) acrylate, 1,6-hexanediol di (meth) acrylate, isobornyl (meth) acrylate, and dimethylol tricyclodecane di (meth) acrylate are preferable, and 1,6-hexanediol di (meth) acrylate, isobornyl (meth) acrylate, and 1,9-nonanediol di (meth) acrylate are more preferable.

Since the photopolymerizable monomer having the solubility parameter (the SP value) of 20.0 $(J/cm^3)^{0.5}$ or less, in particular, the monomer represented by the general formula (A) has a low polarity, such a photopolymerizable monomer has excellent compatibility with the oligomer and the fluorine compound and the silicon compound as the low surface energy, allowing the addition of the oligomer and the fluorine compound and the silicon compound as the low surface energy over a wide range. Therefore, even when the fluorine compound and the silicon compound as the low surface energy in great amounts are added, the cloudiness, the layer separation and the like may be suppressed. Also, the appearance after curing is improved, allowing a member using the cured layer to have excellent appearance. Further, since the resin obtained by curing the photocurable resin composition has high hydrophobicity, the cured layer becomes highly resistant against the water, the cleaner used in the wet area, and colorant such as hair colorant and hard to be stained. Therefore, the long-term stability of the water-slippering property is further improved.

Usually, the number of functional groups of the photopolymerizable monomer is 1 to 6, preferably 1 to 4. When the number of functional groups is 1, although there is a tendency that the crosslink density decreases, using a monomer with the cyclic skeleton increases the glass transition temperature, allowing an excellent film properties to be retained. Also, when the number of functional groups is 2 to 6, preferable 2 to 4, there is a tendency that the crosslinking reaction of the photocurable composition is appropriately retained, presumably facilitating an effective suppression of a phenomenon in which the colorant, in particular, leaches into the cured layer and stains the member. Accordingly, a member that includes a cured layer having a preferable curing ability while effectively retaining excellent antifouling property as well as the chemical resistance and the stain resistance may be obtained.

-- Thermally-polymerizable resin --

The thermally-polymerizable resin is not particularly limited but may be appropriately selected based on the purpose, and may be either the thermosetting resin made of the base resin alone (100% base resin) or the thermosetting resin made from the base resin and the diluent. The thermally-polymerizable resin includes, for example, epoxy resin having at least one epoxy group, urethane resin, polyester resin and the like. These resins may be used alone or in combination with one or more thereof

The base resin is not particularly limited but may be appropriately selected based on the purpose, and may be, for example, glycidyl ether type epoxy resin, glycidyl ester type epoxy resin, glycidyl amine type epoxy resin, cycloaliphatic epoxy resin, or the like.

The diluent is not particularly limited but may be appropriately selected based on the purpose, and may be, for example, an epoxy compound having low molecular weight (e.g., butyl glycidyl ether, tertiary carboxylic acid glycidyl ester, or the like).

« Additive »

The additive is a compound added to the curable resin composition such that fluorine and the silicon-containing compound segregate on the surface of the cured layer obtained by curing the curable resin composition, and may be, for example, a fluorine-containing compound (a fluorine source), the silicon-containing compound (a silicon source), a compound including both the fluorine element and the silicon element in a molecular structure, or the like.

Note that the additive components described above (the fluorine-containing compound, the silicon-containing compound, and the compound including both the fluorine element and the silicon element in the molecular structure) may also be internally added to the curable resin (base resin).

A method of the internal addition is not particularly limited but may be appropriately selected based on the purpose, and may be (i) a method of mixing into the curable resin (base resin) and fixing (grafting and the like) by the crosslinking reaction, (ii) a method of mixing into thermoplastic resin heated to the glass transition point or higher, or the like.

- Fluorine-containing compound (fluorine source) -

The fluorine-containing compound (the fluorine source) is not particularly limited but may be appropriately selected based on the purpose, and may be, for example, perfluorooctyl ethyl acrylate, 1H, 1H, 5H-octafluoropentyl acrylate, acrylic-modified perfluoropolyether, or the like. These fluorine-containing compounds may be used alone or in combination with one or more thereof

Among them, those having the reactive group which reacts with the base resin or the base layer and to be fixed on the surface are preferable.

As the fluorine-containing compound (the fluorine source), industrially available ones may be used.

In particular, the fluorine-containing compound (the fluorine source) is not particularly limited but may be appropriately selected based on the purpose, and may be, for example, RS-75 (produced by DIC Kako Inc.), RS-72K (produced by DIC Kako Inc.), DAC-HP (produced by Daikin Industries, Ltd.), Lubron (produced by Daikin Industries, Ltd.), FA-108 (produced by Kyoeisha Chemical Co., Ltd.), LUMIFLON (produced by Asahi Glass Co., Ltd.), Modiper F-series (produced by NOF Corporation), Hyper Tech (produced by Nissan Chemical Industries, Ltd.), KY-1203 (produced by Shin-Etsu Chemical Co., Ltd.), Fluoro-link (produced by Solvay Solexis), V-3F (produced by Osaka Organic Industry Co., Ltd.), V-4F (produced by Osaka Organic Industry Co., Ltd.), V-8F (produced by Osaka Organic Industry Co., Ltd.), or the like.

A blending amount of the fluorine-containing compound (the fluorine source) is not particularly limited but may be appropriately selected based on the purpose and, with respect to 100 parts by mass of the curable resin (base resin), preferably 0.01 parts by mass to 5.0 parts by mass, more preferably 0.1 parts by mass to 3.0 parts by mass.

When the blending amount of the fluorine-containing compound (the fluorine source) is less than 0.01 parts by mass, an effect of blending the additive may not be sufficiently obtained, possibly inhibiting the obtainment of the effect of the present invention. On the other hand, when the blending amount of the fluorine-containing compound (the fluorine source) exceeds 5.0 parts by mass, there is a problem that the compatibility with the curable resin (base resin) may not be ensured. When the blending amount of the fluorine-containing compound (the fluorine source) is within the preferable range described above, it is advantageous in ensuring the compatibility as well as allowing for an adjustment of fluorine concentration and silicon concentration on the surface as desired without inhibiting the segregation of the silicon compound on the surface.

- Silicon-containing compound (silicon source) -

The silicon-containing compound (the silicon source) is not particularly limited but may be appropriately selected based on the purpose, and may be, for example, polyorganosiloxane, various organic-modified polyorganosiloxane, surface-treated silica, or the like. These silicon-containing compounds may be used alone or in combination with one or more thereof

Among them, those having the reactive group which reacts with the base resin or the base layer and to be fixed on the surface are preferable.

As the silicon-containing compound (the silicon source), industrially available ones may be used.

In particular, the silicon silicon-containing compound (the silicon source) is not particularly limited but may be appropriately selected based on the purpose, and may be, for example, silicone oil ((i) KF-96 series produced by Shin-Etsu Chemical Co., Ltd.; (ii) TSF451 series produced by Momentive Performance Materials Inc.; (iii) AK series produced by Asahi Kasei Wacker Silicone Co., Ltd.), modified silicone oil ((i) X-22-164, X-22-164AS, X-22-164A, X-22-164B, X-22-164C, X-22-164E, X-22-174DX, X-22-2426, and X-22-2475 produced by Shin-Etsu Chemical Co., Ltd.; (ii) TSF4452, TSL9706 produced by Momentive Performance Materials Inc.; (iii) L series produced by Wacker Asahi Kasei Silicone Co., Ltd.), silicone resin (produced by Dow Coming Toray Co., Ltd.), SIU series (produced by MIWON Specialty Chemical Co., Ltd.), SILAPLANE (produced by JNC Corporation.), Modiper FS series (produced by NOF CORPORATION), TEGORAD series (produced by Evonik Japan Co., Ltd.), or the like.

A blending amount of the silicon-containing compound (the silicon source) is not particularly limited but may be appropriately selected based on the purpose and, with respect to 100 parts by mass of the curable resin (base resin), preferably 0.01 parts by mass to 5.0 parts by mass, more preferably 0.1 parts by mass to 3.0 parts by mass.

When the blending amount of the silicon-containing compound (the silicon source) is less than 0.01 parts by mass, an effect of blending the additive may not be sufficiently obtained, possibly inhibiting the obtainment of the effect of the present invention. On the other hand, when the blending amount of the silicon-containing compound (the silicon source) exceeds 5.0 parts by mass, there is a problem that the compatibility with the curable resin (base resin) may not be ensured. When the blending amount of the silicon-containing compound (the fluorine source) is within the more preferable range described above, it is advantageous in ensuring the compatibility as well as allowing for an adjustment of the fluorine concentration and the silicon concentration on the surface as desired without inhibiting the segregation of the fluorine compound on the surface.

When the blending amounts of the fluorine-containing compound (the fluorine source) and the silicon-containing compound (the silicon source) are within the above ranges, an ratio of the blending amounts is more important than each blending amount. For example, when the ratio of the blending amounts are equal to each other, regardless of the blending amounts, the member having, at least on the surface thereof, a cured layer obtained by curing the curable resin composition having fluorine and silicon segregating on the surface of the cured layer, may have improved slidability while maintaining the water repellency and the oil repellency.

- Compound having both fluorine element and silicon element (silicon source and fluorine source) in molecule structure -

As the compound having both fluorine element and silicon element (the fluorine source and the silicon source) in the molecule structure, industrially available ones may be used.

In particular, the compound having both the fluorine element and the silicon element (the silicon source and the fluorine source) in the molecule structure is not particularly limited but may be appropriately selected based on the purpose, and may be, for example, OPTOOL AES4-E (produced by Daikin Industries, Ltd.), ZX series (produced by Fuji Kasei Kogyo Co., Ltd.), KBM-7103 (produced by Shin-Etsu Silicone Co., Ltd.), or FMV-4031 (produced by Geles, Inc.). These compounds may be used alone or in combination with one or more thereof.

Among them, those having the reactive group which reacts with the base resin or the base layer and to be fixed on the surface are preferable.

A blending amount of the compound having both the fluorine element and the silicon element (the fluorine source and the silicon source) in the molecular structure is not particularly limited but may be selected based on the purpose and, with respect to 100 parts by mass of the curable resin (the base resin), preferably 0.01 parts by mass to 5.0 parts by mass, more preferably 0.1 parts by mass to 3.0 parts by mass.

When the blending amount of the compound having both the fluorine element and the silicon element (the fluorine source and the silicon source) in the molecular structure is less than 0.01 parts by mass, an effect of blending the additive may not be sufficiently obtained, possibly inhibiting the obtainment of the effect of the present invention. On the other hand, when the blending amount of the compound having both the fluorine element and the silicon element (the fluorine source and the silicon source) in the molecular structure exceeds 5.0 parts by mass, there is a problem that the compatibility with the curable resin (the base resin) may not be ensured. When the blending amount of the compound having both the fluorine element and the silicon element (the fluorine source and the silicon source) in the molecular structure is within the more preferable range described above, it is advantageous in ensuring the compatibility as well as sufficiently demonstrating the effect of the segregation on the surface.

« Polymerization initiator »

Polymerization initiator has an effect of initiating the polymerization of the oligomer and the monomer, and may be a photo polymerization initiator, a thermal polymerization initiator, and the like.

- Photopolymerization initiator -

A photopolymerization initiator is not particularly limited but may be appropriately selected based on the purpose, and may be, for example, 4-dimethylamino benzoic acid, 4-dimethylamino-benzoic acid ester, 2,2-dimethoxy-2-phenyl acetophenone, acetophenone diethyl ketal, alkoxy acetophenone, benzyl dimethyl ketal, benzophenone and 3,3-dimethyl-4-methoxy benzophenone, 4,4-dimethoxy benzophenone, benzophenone derivative such as 4,4-diamino benzophenone, benzoylbenzoic acid alkyl, bis (4-dialkylamino phenyl) ketone, benzyl derivatives such as benzyl and benzyl methyl ketal, benzoin derivatives such as benzoin and benzoin isobutyl ether, benzoin isopropyl ether, 2-hydroxy-2-methylpropiophenone, 1-hydroxy-cyclohexyl-phenylketone, xanthone, thioxanthone and thioxanthone derivatives, fluorene, 2,4,6-trimethylbenzoyl diphenylphosphine oxide, bis (2,6-dimethoxybenzoyl)-2,4,4-trimethylpentyl phosphine oxide, bis (2,4,6-trimethylbenzoyl)-phenylphosphine oxide, 2-methyl-1-(4-methylthiophenyl)-2-morpholinopropane-1-one, 2-benzyl-2-dimethylamino-1-(4-morpholinophenyl)-butanone-1, or the like. These photopolymerization initiators may be used alone or in combination with one or more thereof.

A blending amount of the photopolymerization initiator in the curable resin composition is not particularly limited but may be appropriately selected based on the intended purpose and, with respect to 100 parts by mass of a total of the curable resin (the base resin) and the additive, preferably 0.1 parts by mass to 10 parts by mass. When the blending amount of the photopolymerization initiator is 0.1 parts by mass or more, the amount is sufficient to start the polymerization reaction. On the other hand, when the blending amount of the photopolymerization initiator exceeds 10 parts by mass, the effect of initiating the polymerization reaction is saturated, noticeably staining and increasing material cost of the curable resin composition.

- Thermal polymerization initiator -

The thermal polymerization initiator is not particularly limited but may be appropriately selected based on the purpose, and may be, for example, modified aliphatic polyamine, Niper BMT, PERBUTYL O, PERBUTYL I, PERBUTYL Z, Perhexyl D, or the like. These thermal polymerization initiators may be used alone or in combination with one or more thereof

A blending amount of the thermal polymerization initiator in the curable resin composition is not particularly limited but may be appropriately selected based on the intended purpose and, with respect to 100 parts by mass of the total of the curable resin (the base resin) and the additive, preferably 0.1 parts by mass to 5 parts by mass. When the blending amount of the thermal polymerization initiator is 0.1 parts by mass or more, the amount is sufficient to start the polymerization reaction. On the other hand, when the blending amount of the photopolymerization initiator exceeds 5 parts by mass, the effect of initiating the polymerization reaction is saturated, and the material cost of the curable resin composition is increased.

« Other components »

- Photosensitizer -

In the curable resin composition, in view of curing reactivity and the stability that are required, photosensitizer may be further contained if necessary. The photosensitizer, when light is irradiated thereto, has an effect of absorbing energy, causing the energy or electron to move to the polymerization initiator and initiating the polymerization. The photosensitizer may be p-dimethylamino benzoic acid isoamyl ester and the like. A blending amount of the photosensitizer, with respect to 100 parts by mass of the total of the curable resin (the base resin) and the additive, is preferably 0.1 parts by mass to 10 parts by mass.

- Polymerization inhibitor -

Further, the curable resin composition, in view of the curing reactivity and the stability that are required, polymerization inhibitor may be further contained as necessary. The polymerization inhibitor may be hydroquinone, hydroquinone monomethyl ether, p-methoxyphenol, 2,4-dimethyl-6-t-butylphenol, 2,6-di-t-butyl-p-cresol, butylated hydroxyanisole, 3-hydroxy thiophenol, $\alpha$-nitroso-$\beta$-naphthol, p-benzoquinone, 2,5-dihydroxy-p-quinone, and the like. A blending amount of the polymerization inhibitor, with respect to 100 parts by mass of the total of the curable resin (the base resin) and the additive, is preferably 0.1 parts by mass to 10 parts by mass.

- Organic solvent -

Further, the curable resin composition may contain, as a diluting solvent, an organic solvent such as ether, ketone, ester, and the like. The organic solvent may be propylene glycol monomethyl ether acetate (PMA), methyl ethyl ketone (MEK), methyl isobutyl ketone (MIBK), acetone, butyl lactate and the like. These diluting solvents may be used alone or in combination with one or more thereof.

« Method of forming cured layer »

The curable resin composition described above is applied to the base layer described later by coating and the like (a forming (coating) step) and then cured (a curing step), thereby the cured layer may be formed on the base layer described later.

Here, when the curable resin composition described above is formed on the base layer, the curable resin composition may react with the functional group ((for example, an epoxy group and a hydroxyl group) of the base layer described later and may be fixed on the base layer. Such a structure may further improve adhesion of the substrate and the resin composition.

In this case, also, the curable resin composition may contain a silane coupling agent for facilitating the fixation to the base layer.

The silane coupling agent is not particularly limited but may be appropriately selected based on the purpose.

The formation described above may be carried out by, for example, applying the curable resin composition as a coating liquid, by using the dilution solvent if necessary, on the surface of the base layer. A method of the formation is not particularly limited but known methods may be employed. The known methods may include, for example, coating such as gravure coating, roll coating, reverse coating, knife coating, die coating, lip coating, doctor coating, extrusion coating, slide coating, wire bar coating, curtain coating, extrusion coating, spin coating and the like and dipping.

As the substrate, also, a curable resin (internally added base resin) containing the fluorine-containing compound and the silicon-containing element and/or the compound containing the fluorine element and the silicon element in one molecular kneaded thereinto may be cured (thermally polymerized) so as to form the cured layer.

A curing method is not particularly limited but may be appropriately selected based on the purpose, and may be, for example, (i) a method of irradiating the lights such as ultraviolet rays, (ii) a method of heating, or (iii) a method of carrying out the irradiation of the light and the heating simultaneously or sequentially.

The surface on the base layer where the cured layer is formed may be either one of the front surface and the rear surface or both of the surfaces, which may be appropriately selected as necessary.

A dose of the light to photocure the curable resin composition is not particularly limited but may be appropriately selected based on the purpose. In employing the ultraviolet rays, typically, an irradiation intensity is 20 mW/cm$^2$ to 2000 mW/cm$^2$, and the dose is 100 mj/cm$^2$ to 5000 mj/cm$^2$, whereby the curable resin composition is usually cured in several seconds to several tens of seconds. In this way, the curable resin composition may be cured in a short time, allowing an improvement in the productivity of the functional panel obtained.

When the ultraviolet rays are irradiated, ultraviolet curing reaction is a radical reaction and thus susceptible to inhibition by oxygen. Therefore, after application of the curable resin composition to the base layer, in order to avoid contact with oxygen, the curable resin composition may be cured under a nitrogen atmosphere. Also, the surface free energy of the cured layer formed by the curing, in order to sufficiently ensure excellent slidability, is typically preferably 12 mj/m$^2$ to 30 mj/m$^2$

Further, the heating temperature for the thermosetting of the curable resin composition is not particularly limited but may be appropriately selected based on the purpose, and is usually 100°C to 200°C, whereby the curable resin composition is normally cured in 1 minute to 60 minutes.

« Thickness of cured layer »

A thickness of the cured layer is not particularly limited but may be appropriately selected based on the purpose in view of design and a degree of chemical resistance that are required, and is assumed to be normally in a range of 1 $\mu$m to 200 $\mu$m.

< Base layer >

A material of the base layer is not particularly limited but may be appropriately selected based on the purpose, and may be, for example, an inorganic material such as slate, concrete, metal, calcium silicate, calcium carbonate, glass and the like; a wood material; an organic material such as polypropylene, polystyrene, polycarbonate, unsaturated polyester resin and the like; or compound materials thereof, and may be a base layer integrated with the cured layer as described above.

Among them, a material in which fibers such as glass fibers or carbon fibers are added to the organic agent, i.e., so-called FRP (fiber reinforced plastic) is preferable. The FRP is not particularly limited but may be appropriately selected based on the purpose, and maybe, for example, a sheet molding compound (SMC) in a sheet form containing unsaturated polyester resin, fillers, and the glass fibers or the carbon fibers, or a bulk molding compound (BMC), which is a composite material similarly to the SMC, in a block form containing short fibers. Generally, the FRP contains the thermosetting resin, the thermoplastic resin such as powder polyethylene, organic peroxide (a curing agent), the filler, a low profile additive, an internal release agent such as zinc stearate, a reinforcing material (a reinforcing agent), a crosslinking agent such as styrene monomer and the like, colorant as toner and the like, polymerization inhibitor such as parabenzoquinone and the like, thickener such as magnesium oxide, and the like. The FRP is generally introduced in a mold set at a predetermined temperature and pressure-molded into a shape according to a position to dispose thus obtained product as a building material. Among them, the FRP containing, as the reinforcing material, unsaturated polyester as the thermosetting resin, the filler, and the glass fiber or the carbon fiber may improve the strength and the durability of the entire functional panel obtained.

The unsaturated polyester described above may be produced from (i) maleic anhydride, unsaturated acid of polybasic acid such as fumaric acid and the like and (ii) polyhydric alcohol such as ethylene glycol, propylene glycol, diethylene glycol, dipropylene glycol, trimethylene glycol, trimethyl pentanediol, neo pentyl glycol, trimethylolpropane monoallyl ether, hydrogenated bisphenol, bisphenol dioxypropyl ether, and the like.

The filler is not particularly limited but may be appropriately selected based on the purpose, and may be, for example, calcium carbonate, aluminum hydroxide, or the like. Among them, calcium carbonate is preferable from the viewpoint of cost reduction, while aluminum hydroxide is preferable from the viewpoint of improving the chemical resistance of the FRP itself. However, when the curable layer is formed as described above, even when the FRP using calcium carbonate as the filler in the base layer is employed, the chemical resistance of the entire functional panel may be sufficiently improved. Therefore, a functional panel including the base layer made of FRP at low cost may be easily achieved.

The glass fiber and the carbon fiber for serving as the reinforcing material are not particularly limited but may be appropriately selected based on the purpose, and preferably have a fiber length of approximately 20 mm to 50 mm and a fiber diameter of approximately 5 $\mu$m to 25 $\mu$m and are contained in an amount of 10 wt% to 70 wt% in the FRP. The FRP used as the base layer is produced by mixing these components and forming the FRP having a predetermined thickness and size by using an FRP manufacturing apparatus or the like.

Note that the thickness of the base layer is not particularly limited but may vary based on the use of the functional panel, and is usually at least 2.5 mm. A maximum thickness of the base layer is not particularly limited but may be appropriately selected based on the purpose.

< Other layers >

Other layers are not particularly limited but may be appropriately selected based on the purpose, and may be, for example, an intermediate layer formed between the cured layer and the base layer.

The intermediate layer is not particularly limited but may be appropriately selected based on the purpose, and may be, for example, an undercoat layer for improving the adhesion between the base layer and the cured layer, or a decorative layer that is patterned or colored so as to improve a design of the functional panel.

EXAMPLES

Hereinafter, the present invention is described in more detail by using examples, although the present invention is not limited to the following examples in any manners.

< Preparation and evaluation of curable resin composition >

Following formulation shown in Table 1 to Table 5, the components were introduced into a stirring apparatus and mixed therein, and thus the curable resin composition was prepared. The curable resin composition thus obtained was applied to the upper surface of the base layer made of FRP (DIC mat (registered trademark) 2415 produced by DIC Kako Inc.) having a thickness of 20 $\mu$m. Then, the curable resin composition was cured by UV radiation (1000 mW/cm$^2$, 4000 mJ/cm$^2$) (in Example 14, the curable resin composition in a predetermined amount in the FRP was cured by heating at 140 °C for 60 minutes), and thus a sample of the base layer having the cured layer formed thereon was obtained. The water repellency, the slidability (the water-slippering property), the oil repellency, and oil slidability of the sample were evaluated by using the methods described below. Thereby, results shown in Table 1 to Table 5 were obtained.

In Example 16, the internal addition to the FRP was carried out as described below.

Components shown in Table A below were mixed, and a FRP composition (internally added base resin * 13 in Table 4) was thus prepared. To the FRP composition, the fluorine compound and the silicon compound in amounts shown in Table 4 were added and thus obtained mixture was kneaded and then impregnated with a chopped strand mat of the glass fiber. Note that an amount of the glass fiber in Table A means a ratio thereof to a total mass of the FRP composition. An FRP composition thus obtained was molded into a sheet, and the sheet was cured at curing temperature of 140 °C for 60 minutes, thereby obtaining the composition of Example 16.

[Table A]

| FRP composition constituent element | | Content (parts by mass) |
|---|---|---|
| Base resin | Polyester resin *a | 75.0 |
| | Polystyrene resin *b | 25.0 |
| Crosslinking agent | Styrene monomer | 10.0 |
| Filler | Calcium carbonate | 140 |
| Curing catalyst | Organic peroxide *c | 1.00 |
| Internal mold release agent | Zinc stearate | 5.00 |
| Colorant | Toner *d | 5.00 |
| Thickener | Magnesium oxide | 1.00 |
| Reinforcing agent | Glass fiber *e | 25 (mass%) |
| Polymerization inhibitor | P-benzoquinone | 0.05 |
| In Table A, *a to *e are as follows:<br>* A: unsaturated polyester-styrene solution, POLYLITE PS-280 produced by DIC Kako Inc.<br>* b: POLYLITE PB-956 produced by DIC Kako Inc.<br>* c: t-butyl perbenzoate<br>* d: POLYTON COLOR PC5751 produced by DIC Kako Inc.<br>* e: chopped strand glass of approximately 25 mm | | |

(1) Water repellency

The evaluation of the water repellency was carried out by measuring a water contact angle of the water. For the measurement of the water contact angle, DM-500 produced by Kyowa Interface Science Co., Ltd. was employed. Water droplets of 1.5 $\mu$L were dropped on the cured layer formed on the upper surface of the base layer, and the water contact angle was measured immediately. The measurement was carried out three times, and an average value of the water contact angles is used as a value of the water contact angle. The larger the water contact angle is, the better the water repellency is.

(2) Slidability (water-slipping property)

The evaluation of the slidability (the water-slippering property) was carried out by measuring a water falling angle. For the measurement of the water falling angle, DM-500 and DM-SA produced by Kyowa Interface Science Co., Ltd. were employed. Water droplets of 30 $\mu$L were dropped on the cured layer formed on the upper surface of the base layer, and a stage was tilted at a speed of 7.5 degrees/sec, so as to obtain an angle at which the water droplets started moving as a value of the falling angle. The measurement was carried out twice, and an average value of the water falling angles is used as a value of the water falling angle. The smaller the water falling angle is, the better the slidability is.

(3) Oil repellency

The evaluation of the oil repellency was carried out by measuring a contact angle of oleic acid. For the measurement of the contact angle, DM-500 produced by Kyowa Interface Science Co., Ltd. was employed. Droplets of oleic acid of 1.5 $\mu$L were dropped on the cured layer formed on the upper surface of the base layer, and the contact angle of oleic acid was measured immediately. The measurement was carried out three times, and an average value of the contact angles of oleic acid is used as a value of the contact angle of oleic acid. The larger the contact angle is, the better the oil repellency is.

(4) Oil Slidability

The evaluation of the oil slidability was carried out by measuring a falling angle of oleic acid. For the measurement of the contact angle, DM-500 and DM-SA produced by Kyowa Interface Science Co., Ltd. were employed. Droplets of oleic acid of 10 $\mu$L were dropped on the cured layer formed on the upper surface of the base layer, and the stage was tilted at the speed of 7.5 degrees/sec, so as to obtain an angle at which the droplets of oleic acid started moving as a value of the falling angle. The measurement was carried out twice, and an average value of the falling angles of oleic acid is used as a value of the falling angle of oleic acid. The smaller the water falling angle is, the better the oil slidability is.

[Table 1]

| | | | | Comparative Example 1 | Comparative Example 2 | Example 1 | Example 2 | Example 3 | Example 4 | Example 5 | Example 6 | Comparative Example 3 | Comparative Example 4 |
|---|---|---|---|---|---|---|---|---|---|---|---|---|---|
| Composition | Base resin | Oligomer | UA-306H *1 | 50 | 50 | 50 | 50 | 50 | 50 | 50 | 50 | 50 | 50 |
| | | | Urethane | - | - | - | - | - | - | - | - | - | - |
| | | | Acrylate | | | | | | | | | | |
| | | | Oligomer *2 | | | | | | | | | | |
| | | Monomer | 1,9ND-A *3 | 40 | 40 | 40 | 40 | 40 | 40 | 40 | 40 | 40 | 40 |
| | | | NP-A *4 | - | - | - | - | - | - | - | - | - | - |
| | | | DPE-6A *5 | 10 | 10 | 10 | 10 | 10 | 10 | 10 | 10 | 10 | 10 |
| | Polymerization initiator | | IRGACURE.184 *6 | 3 | 3 | 3 | 3 | 3 | 3 | 3 | 3 | 3 | 3 |
| | | | Thermal polymerization initiator *7 | - | - | - | - | - | - | - | - | - | - |
| | Additive | Silicon source | TEGORAD2500 *8 | - | - | - | - | - | - | - | - | - | - |
| | | | SIU2400 *9 | 0.5 | 3.0 | 2.0 | 1.0 | 0.7 | 0.5 | 0.25 | 0.1 | 0.1 | 0 |
| | | Fluorine source | RS75 *10 (active ingredient 40%) | - | 0.25 (Active ingredient 0.1) | 0.25 (Active ingredient 0.1) | 0.25 (Active ingredient 0.1) | 0.25 (Active ingredient 0.1) | 0.25 (Active ingredient 0.1) | 0.25 (Active ingredient 0.1) | 0.25 (Active ingredient 0.1) | 1.25 (Active ingredient 0.5) | 0.25 (Active ingredient 0.1) |
| | | | DAC-HP *11 (active ingredient 20%) | - | - | - | - | - | - | - | - | - | - |
| | | Compound having both a fluorine element and a silicon element in molecular structure * 12 | | - | - | - | - | - | - | - | - | - | - |
| | Internally added base resin *13 | | | - | - | - | - | - | - | - | - | - | - |
| | Ratio of blending amounts (silicon source/fluorine source) | | | - | 30.0 | 20.0 | 10.0 | 7.0 | 5.0 | 2.5 | 1.0 | 0.2 | 0.0 |

EP 2 891 669 A1

19

| | | | Compara-tive Example 1 | Compara-tive Example 2 | Example 1 | Example 2 | Example 3 | Example 4 | Example 5 | Example 6 | Compara-tive Example 3 | Compara-tive Example 4 |
|---|---|---|---|---|---|---|---|---|---|---|---|---|
| | Percentage of fluorine source in additive | | 0.0 | 0.03 | 0.05 | 0.09 | 0.13 | 0.17 | 0.29 | 0.5 | 0.83 | 1.00 |
| Result of UPS analysis | Detection angle 15° | Fluorine element (F) (at%) | 0.0 | 0.6 | 1.1 | 2.4 | 3.0 | 3.1 | 3.0 | 3.0 | 12.5 | 19.9 |
| | | Silicone element (Si) (at%) | 10.8 | 13.8 | 13.6 | 12.3 | 13.4 | 12.2 | 9.0 | 2.4 | 0.8 | 0.0 |
| | | Carbon element (C) (at%) | 63.7 | 59.8 | 58.8 | 61.8 | 54.9 | 57.0 | 66.1 | 67.8 | 58.7 | 54.1 |
| | | Oxygen element (O) (at%) | 24.5 | 25.2 | 26.5 | 23.5 | 26.7 | 27.7 | 20.7 | 25.7 | 25.8 | 22.8 |
| | | Nitrogen element (N) (at%) | 1.0 | 0.6 | 0.0 | 0.0 | 2.0 | 0.0 | 1.2 | 1.1 | 2.2 | 3.2 |
| | | Element ratio (F/Si×100) | 0.0 | 4.3 | 8.1 | 19.5 | 22.4 | 25.4 | 33.3 | 125.0 | 1562.5 | - |
| | Detection angle 45° | Fluorine element (F) (at%) | 0.0 | 0.0 | 0.1 | 1.0 | 1.2 | 0.9 | 1.0 | 1.3 | 6.2 | 10.7 |
| | | Silicone element (Si) (at%) | 6.1 | 7.2 | 8.2 | 5.5 | 5.6 | 4.9 | 3.7 | 1.4 | 0.3 | 0.0 |
| | | Carbon element (C) (at%) | 67.7 | 67.2 | 65.7 | 69.6 | 68.9 | 70.1 | 71.8 | 71.5 | 68.5 | 62.1 |
| | | Oxygen element (O) (at%) | 24.7 | 25.3 | 26.0 | 23.9 | 22.8 | 21.9 | 22.1 | 24.2 | 23.8 | 24.1 |
| | | Nitrogen element (N) (at%) | 1.5 | 0.3 | 0.0 | 0.0 | 1.5 | 1.4 | 1.5 | 1.6 | 1.2 | 3.1 |
| | | Element ratio (F/Si×100) | 0.0 | 0.0 | 1.2 | 18.2 | 21.4 | 18.4 | 27.0 | 92.9 | 1860.0 | - |
| Physical property | Water contact angle (°) | | 100.3 | 100.5 | 100.8 | 100.7 | 100.7 | 100.4 | 100.2 | 100.1 | 98.6 | 96.1 |
| | Water falling angle (°) | | 52 | 50 | 48 | 44 | 43 | 45 | 49 | 51 | 59.5 | 65.5 |
| | Oleic acid contact angle (°) | | 48 | 48.5 | 51.3 | 52.2 | 54.3 | 53.9 | 52.2 | 56.3 | 62.8 | 65.3 |
| | Oleic acid falling angle (°) | | 13 | 13 | 17 | 17 | 14 | 12 | 12 | 14 | 18 | 24 |

[Table 2]

| | | | | Example 1 | Example 7 | Example 8 |
|---|---|---|---|---|---|---|
| Composition | Base resin | Oligomer | UA-306H *1 | 50 | 50 | 50 |
| | | | Urethane | | | |
| | | | Acrylate | - | - | - |
| | | | Oligomer *2 | | | |
| | | Monomer | 1,9ND-A *3 | 40 | 40 | 40 |
| | | | NP-A *4 | - | - | - |
| | | | DPE-6A *5 | 10 | 10 | 10 |
| | Polymerization initiator | | IRGACURE.184 *6 | 3 | 3 | 3 |
| | | | Thermalpolymrizatbn initiator *7 | - | - | - |
| | Additive | Silicon source | TEGORAD2500 *8 | - | - | - |
| | | | SIU3400 *9 | 2.0 | 0.1 | 0.1 |
| | | Fluorine source | RS75 *10 (active ingredient 40%) | 0.25 (Active ingredient 0.1) | 1.0 (Active ingredient 0.4) | 1.125 (Active ingredient 0.45) |
| | | | DAC-HP *11 (active ingredient 20%) | - | - | - |
| | | Compound having both a fluorine element and a slicon element in molecular structure *12 | | - | - | - |
| | Internally added base resh *13 | | | - | - | - |
| | Ratio of blending amounts (silicon source/fluorine source) | | | 20.0 | 0.25 | 0.22 |
| | Percentage of fluorine source in additive | | | 0.05 | 0.8 | 0.82 |
| Result of XPS analysis | Detection angle 15° | | Fluorine element (F) (at%) | 1.1 | 8.7 | 9.8 |
| | | | Silicone element (Si) (at%) | 13.6 | 1.2 | 1.0 |
| | | | Carbon element (C) (at%) | 58.8 | 63.5 | 63.4 |
| | | | Oxygen element (O) (at%) | 26.5 | 26.4 | 25.4 |
| | | | Nitrogen element (N) (at%) | 0.0 | 0.2 | 0.4 |
| | | | Element ratio (F/Si×100) | 8.1 | 725.0 | 980.0 |
| | Detection angle 45° | | Fluorine element (F) (at%) | 0.1 | 5.1 | 5.8 |
| | | | Silicone element (Si) (at%) | 8.2 | 0.6 | 0.4 |
| | | | Carbon element (C) (at%) | 65.7 | 69.6 | 68.6 |
| | | | Oxygen element (O) (at%) | 26.0 | 24.2 | 25.1 |
| | | | Nitrogen element (N) (at%) | 0.0 | 0.5 | 0.1 |
| | | | Element ratio (F/Si×100) | 1.2 | 850.0 | 1450.0 |

(continued)

| | | Example 1 | Example 7 | Example 8 |
|---|---|---|---|---|
| Physical property | Water contact angle (°) | 100.8 | 99.2 | 99.0 |
| | Water falling angle (°) | 48 | 50 | 52 |
| | Oleic acid contact angle (°) | 51.3 | 61.5 | 62.1 |
| | Oleic acid falling angle (°) | 17 | 17 | 18 |

| | Example 1 | Example 7 | Example 8 |
|---|---|---|---|

[Table 3]

| Composition | | | | Example 1 | Example 2 | Example 9 | Example 10 | Example 6 |
|---|---|---|---|---|---|---|---|---|
| | Base resin | Oligomer | UA-306H *1 | 50 | 50 | 50 | 50 | 50 |
| | | | Urethane | - | - | - | - | - |
| | | | Acrylate | | | | | |
| | | | Oligomer *2 | | | | | |
| | | Monomer | 1,9ND-A *3 | 40 | 40 | 40 | 40 | 40 |
| | | | NP-A *4 | - | - | - | - | - |
| | | | DPE-6A *5 | 10 | 10 | 10 | 10 | 10 |
| | Polymerization initiator | | IRGACURE.184 *6 | 3 | 3 | 3 | 3 | 3 |
| | | | Thermal polymrization initiator *7 | - | - | - | - | - |
| | Additive | Silicon source | TEGORAD2500 *8 | - | - | - | - | - |
| | | | SIU2400 *9 | 2.0 | 1.0 | 2.2 | 0.15 | 0.1 |
| | | Fluorine source | RS75 *10 (Active ingredient 40%) | 0.25 (Active ingredient 0.1) | 0.25 (Active ingredient 0.1) | 0.25 (Active ingredient 0.1) | 0.25 (Active ingredient 0.1) | 0.25 (Active ingredient 0.1) |
| | | | DAC-HP *11 (Active ingredient 20%) | - | - | - | - | - |
| | | Compound having both a fluorine element and a silicon element in molecular structure *12 | | - | - | - | - | - |
| | | Internally added base resin *13 | | - | - | - | - | - |
| | | Ratio of blending amounts (silicon source/fluorine source) | | 20.0 | 10.0 | 22.0 | 1.5 | 1.0 |
| | | Percentage of fluorine source in additive | | 0.05 | 0.09 | 0.04 | 0.4 | 0.5 |

(continued)

| | | | Example 1 | Example 2 | Example 9 | Example 10 | Example 6 |
|---|---|---|---|---|---|---|---|
| Result of XPS analysis | Detection angle 15° | Fluorine element (F) (at%) | 1.1 | 2.4 | 1.0 | 3.0 | 3.0 |
| | | Silicone element (Si) (at%) | 13.6 | 12.3 | 13.7 | 5.1 | 2.4 |
| | | Carbon element (C) (at%) | 58.8 | 61.8 | 59.2 | 66.8 | 67.8 |
| | | Oxygen element (O) (at%) | 26.5 | 23.5 | 25.8 | 24.4 | 25.7 |
| | | Nitrogen element (N) (at%) | 0.0 | 0.0 | 0.3 | 0.7 | 1.1 |
| | | Element ratio (F/Si×100) | 8.1 | 19.5 | 7.3 | 58.8 | 125.0 |
| | Detection angle 45° | Fluorine element (F) (at%) | 0.1 | 1.0 | 0.4 | 1.2 | 1.3 |
| | | Silicone element (Si) (at%) | 8.2 | 5.5 | 7.6 | 2.2 | 1.4 |
| | | Carbon element (C) (at%) | 65.7 | 69.6 | 66.2 | 71.6 | 71.5 |
| | | Oxygen element (O) (at%) | 26.0 | 23.9 | 25.6 | 23.1 | 24.2 |
| | | Nitrogen element (N) (at%) | 0.0 | 0.0 | 0.2 | 1.9 | 1.6 |
| | | Element ratio (F/Si×100) | 1.2 | 18.2 | 5.3 | 54.5 | 92.9 |
| Physical property | | Water contact angle (°) | 100.8 | 100.7 | 100.6 | 100.1 | 100.1 |
| | | Water falling angle (°) | 48 | 44 | 49 | 50 | 51 |
| | | Oleic acid contact angle (°) | 51.3 | 52.2 | 50.2 | 55.2 | 56.3 |
| | | Oleic acid falling angle (°) | 17 | 17 | 14 | 13 | 14 |

[Table 4]

| Composition | | | | Example 1 | Example 11 | Example 12 | Example 13 | Example 14 | Example 15 | Example 16 |
|---|---|---|---|---|---|---|---|---|---|---|
| | Base resin | Oligomer | UA-306H *1 | 50 | 30 | 50 | - | - | 50 | - |
| | | | Urethane | - | - | - | 50 | - | - | - |
| | | | Acrylate | | | | | | | |
| | | | Oligomer *2 | | | | | | | |
| | | | EP-4100 *14 | - | - | - | - | 100 | - | - |
| | | Monomer | 1,9ND-A *3 | 40 | 60 | - | 40 | - | 40 | - |
| | | | NP-A *4 | - | - | 40 | - | - | - | - |
| | | | DPE-6A *5 | 10 | 10 | 10 | 10 | - | 10 | - |
| | Polymerization initiator | | IRGACURE.184 *6 | 3 | 3 | 3 | 3 | - | 3 | - |
| | | | EH-451N *7 | - | - | - | - | 40 | - | - |
| | Additive | Silicon source | TEGORAD2500 *8 | - | - | - | - | - | - | - |
| | | | SIU2400 *9 | 2.0 | 2.0 | 2.0 | 2.0 | 2.0 | - | 6.0 |
| | | Fluorine source | RS75 *10 (Active ingredient 40%) | 0.25 (Active ingredient 0.1) | 0.25 (Active ingredient 0.1) | 0.25 (Active ingredient 0.1) | 0.25 (Active ingredient 0.1) | 0.25 (Active ingredient 0.1) | - | 1.0 (Active ingredient 0.4) |
| | | | DAC-HP *11 (Active ingredient 20%) | - | - | - | - | - | - | - |
| | | Compound having both a fluorine element and a silicon element i molecular structure *12 in | | - | - | - | - | - | 2 | - |
| | Internally added base resn *13 | | | - | - | - | - | - | - | 100 |
| | Ratio of blending amounts (silicon source/fluorine source) | | | 20.0 | 20.0 | 20.0 | 20.0 | 20.0 | - | 15.0 |
| | Percentage of fluorine source in additive | | | 0.05 | 0.05 | 0.05 | 0.05 | 0.05 | - | 0.06 |

| | | | Example 1 | Example 11 | Example 12 | Example 13 | Example 14 | Example 15 | Example 16 |
|---|---|---|---|---|---|---|---|---|---|
| Result of XPS analysis | Detection angle 15° | Fluorine element (F) (at%) | 1.1 | 1.1 | 1.2 | 1.2 | 1.5 | 2.5 | 2.2 |
| | | Silicone element (Si) (at%) | 13.6 | 13.5 | 13.2 | 13.5 | 12.8 | 14.2 | 19.8 |
| | | Carbon element (C) (at%) | 58.8 | 63.4 | 57.2 | 58.4 | 60.2 | 59.6 | 55.3 |
| | | Oxygen element (O) (at%) | 26.5 | 22 | 28.4 | 25.4 | 23 | 23.7 | 22.3 |
| | | Nitrogen element (N) (at%) | 0.0 | 0.0 | 0.0 | 1.5 | 2.5 | 0.0 | 0.0 |
| | Detection angle 45° | Element ratio (F/Si×100) | 8.1 | 8.1 | 9.1 | 8.9 | 11.7 | 17.6 | 11.1 |
| | | Fluorine element (F) (at%) | 0.1 | 0.5 | 0.6 | 0.6 | 0.7 | 1.1 | 0.8 |
| | | Silicone element (Si) (at%) | 8.2 | 8.1 | 8.5 | 8.4 | 7.5 | 7.2 | 9.2 |
| | | Carbon element (C) (at%) | 65.7 | 67.2 | 64.9 | 63.8 | 63.2 | 65.9 | 64.5 |
| | | Oxygen element (O) (at%) | 26.0 | 24.2 | 26.0 | 24.2 | 25.4 | 25.8 | 25.5 |
| | | Nitrogen element (N) (at%) | 0.0 | 0.0 | 0.0 | 3.0 | 3.2 | 0.0 | 0.0 |
| | | Element ratio (F/Si×100) | 1.2 | 6.2 | 7.1 | 7.1 | 9.3 | 15.3 | 8.7 |
| Physical property | | Water contact angle (°) | 100.8 | 100.7 | 100.7 | 100.8 | 100.2 | 101.5 | 101.2 |
| | | Water falling angle (°) | 48 | 46 | 47 | 45 | 48 | 44 | 45 |
| | | Oleic acid contact angle (°) | 51.3 | 50.9 | 51.2 | 51.6 | 50.8 | 49.2 | 50.3 |
| | | Oleic acid falling angle (°) | 17 | 17 | 18 | 16 | 17 | 19 | 18 |

EP 2 891 669 A1

[Table 5]

| | | | | Example 1 | Example 17 | Example 18 | Example 19 | Example 20 | Example 21 | Example 22 | Example 23 | Example 24 |
|---|---|---|---|---|---|---|---|---|---|---|---|---|
| Composition | Base resin | Oligomer | UA-306H *1 | 50 | 50 | 50 | 50 | 50 | 50 | 50 | 50 | 50 |
| | | | Urethane | - | - | - | - | - | - | - | - | - |
| | | | Acrylate | | | | | | | | | |
| | | | Oligomer *2 | | | | | | | | | |
| | | Monomer | 1,9ND-A *3 | 40 | 40 | 40 | 40 | 40 | 40 | 40 | 40 | 40 |
| | | | NP-A *4 | - | - | - | - | - | - | - | - | - |
| | | | DPE-6A *5 | 10 | 10 | 10 | 10 | 10 | 10 | 10 | 10 | 10 |
| | Polymerization Initiator | | IRGACURE.184 *6 | 3 | 3 | 3 | 3 | 3 | 3 | 3 | 3 | 3 |
| | | | Thermal polymrization initiator *7 | - | - | - | - | - | - | - | - | - |
| | Additive | Silicon source | TEGORAD2500 *8 | - | 0.1 | 0.1 | 0.5 | 2.0 | 0.1 | 0.1 | 0.1 | 0.1 |
| | | | SIU2400 *9 | 2.0 | - | - | - | - | - | - | - | - |
| | | Fluorine source | RS75 *10 (Active ingredient 40%) | 0.25 (Active ingredient 0.1) | 0.0825 (Active ingredient 0.033) | 0.25 (Active ingredient 0.1) | 1.25 (Active ingredient 0.5) | 5.0 (Active ingredient 2.0) | 0.75 (Active ingredient 0.3) | - | - | - |
| | | | DAC-HP *11 (Active ingredient 20%) | - | - | - | - | - | - | 0.2 (Active ingredient 0.04) | 0.4 (Active ingredient 0.08) | 0.8 (Active ingredient 0.16) |
| | | Compound having both a fluorine element and a silicon element in molecular structure *12 | | - | - | - | - | - | - | - | - | - |
| | | Internally added base resin *13 | | - | - | - | - | - | - | - | - | - |
| | | Ratio of blending amounts (silicon source/fluorine source) | | 20.0 | 3.0 | 1.0 | 1.0 | 1.0 | 0.3 | 2.5 | 1.3 | 0.6 |

(continued)

| | | | Example 1 | Example 17 | Example 18 | Example 19 | Example 20 | Example 21 | Example 22 | Example 23 | Example 24 |
|---|---|---|---|---|---|---|---|---|---|---|---|
| | | Percentage of fluorine source in additive | 0.05 | 0.25 | 0.50 | 0.50 | 0.50 | 0.75 | 0.29 | 0.44 | 0.62 |
| Result of XPS analysis | Detection angle 15 | Fluorine element (F) (at%) | 1.1 | 1.4 | 2.9 | 2.7 | 3.2 | 4.7 | 2.8 | 3.8 | 5.3 |
| | | Silicone element (Si) (at%) | 13.6 | 14.6 | 16.0 | 15.0 | 15.6 | 12.7 | 14.9 | 15.7 | 13.0 |
| | | Carbon element (C) (at%) | 58.8 | 59.1 | 56.7 | 57.2 | 56.8 | 60.0 | 57.7 | 53.9 | 63.1 |
| | | Oxygen element (O) (at%) | 26.5 | 24.0 | 24.4 | 25.1 | 24.4 | 22.4 | 22.5 | 26.6 | 18.6 |
| | | Nitrogen element (N) (at%) | 0.0 | 0.9 | 0.0 | 0.0 | 0.0 | 0.2 | 2.1 | 0.0 | 0.0 |
| | | Element ratio (F/Si×100) | 8.1 | 9.6 | 18.1 | 18.0 | 20.5 | 37.0 | 18.8 | 24.2 | 40.8 |
| | Detection angle 45° | Fluorine element (F) (at%) | 0.1 | 0.8 | 1.3 | 1.8 | 2.8 | 2.6 | 1.2 | 1.7 | 2.9 |
| | | Silicone element (Si) (at%) | 8.2 | 7.9 | 8.6 | 10.0 | 16.1 | 6.5 | 7.0 | 6.1 | 7.7 |
| | | Carbon element (C) (at%) | 65.7 | 64.3 | 64.6 | 64.9 | 56.7 | 65.2 | 64.3 | 77.2 | 64.0 |
| | | Oxygen element (O) (at%) | 26.0 | 25.6 | 25.5 | 23.2 | 24.5 | 24.8 | 25.8 | 15.0 | 25.5 |
| | | Nitrogen element (N) (at%) | 0.0 | 1.7 | 0.0 | 0.0 | 0.0 | 0.9 | 1.7 | 0.0 | 0.0 |
| | | Element ratio (F/Si×100) | 1.2 | 10.1 | 15.1 | 18.0 | 17.4 | 40.0 | 17.1 | 27.9 | 37.7 |
| Physical property | | Water contact angle (°) | 100.8 | 100.6 | 101.3 | 100.5 | 100.9 | 101.2 | 100.5 | 100.6 | 100.3 |
| | | Water falling angle (°) | 48 | 38 | 27 | 23 | 27 | 33 | 28 | 26 | 30 |
| | | Oleic acid contact angle (°) | 51.3 | 52.3 | 54.0 | 54.9 | 55.8 | 54.2 | 51.1 | 52.6 | 55.1 |
| | | Oleic acid falling angle (°) | 17 | - | - | 13 | 14 | - | 12 | 12 | 16 |

In Table 1 to Table 5, * 1 to * 13 are as follows:

* 1: Pentaerythritol triacrylate hexamethylene diisocyanate urethane prepolymer (produced by Kyoeisha Chemical Co., Ltd.)
* 2: urethane acrylate oligomer having the 1,2-polybutylene oxide unit synthesized by a method as stated elsewhere
* 3: 1,9-nonanediol diacrylate (produced by Kyoeisha Chemical Co., Ltd.)
* 4: neopentyl glycol diacrylate (produced by Kyoeisha Chemical Co., Ltd.)
* 5: dipentaerythritol hexa acrylate (produced by Kyoeisha Chemical Co., Ltd.)
* 6: "IRGACURE 184", 1-hydroxy-cyclohexyl-phenyl-ketone (produced by Chiba Japan K.K.)
* 7: modified aliphatic polyamine ("Adeka Hardener (registered trademark) EH-451N" produced by ADEA Co,. Ltd.) (the thermal polymerization initiator)
* 8: silicone acrylate (produced by Evonik Inductries, Ltd.)
* 9: silicone acrylate oligomer (produced by Miwon Specialty Chemical Co., Ltd.)
* 10: reactive fluorine oligomer (produced by DIC Kako Inc.)
* 11: reactive fluorine oligomer (produced by Daikin Industries, Ltd.)
* 12: FMV-4031 (produced by Gelest Inc.) (having the reactive group which reacts with the curable resin and capable of being copolymerized with the curable resin)
* 13: internally-added base resin set forth above (cured by thermal polymerization)
* 14: Adeka Resin EP4100: bisphenolA diglycidyl ether, epoxy equivalent 190

< Method of synthesizing urethane acrylate oligomer having 1,2-polybutylene oxide unit>

To propylene glycol (produced by Kanto Chemical Co., Inc.) of 1 mol, by using potassium hydroxide as a catalyst, butylene oxide of 12 mol was added at the reaction temperature of 110°C. Thereby, polyol was obtained. Polyol thus obtained, together with 2,4-tolylene diisocyanate of 2 mol, was introduced into a reaction vessel equipped with a nitrogen gas inlet tube, a stirrer, and a cooling tube and allowed to react with each other at 70 °C for two hours. Next, to a resulting product thus obtained, 2-hydroxyethyl acrylate of 4 mol and, as a catalyst, dibutyltin dilaurate were added little by little, and a mixture thus obtained was allowed to react at 70 °C for 15 hours. Thereby, urethane acrylate oligomer having the 1,2-butyrene glycol unit with number average molecular weight of approximately 1500 was obtained. A value of n-heptane tolerance of urethane acrylate oligomer having a 1,2-polybutylene oxide unit thus obtained was 1.0 g/10 g.

The value of n-heptane-tolerance of urethane acrylate oligomer having the 1,2-polybutylene oxide unit thus obtained was 1.0 g/10 g.

As can be seen from the results of Examples and Comparative Examples in Table 1 to Table 5, when the region within 1nm in depth from the outermost surface of the cured layer includes the fluorine element at 1.0 at% to 10.0 at% and the silicon element at 1.0 at% to 20.0 at%, the curable resin composition that, while maintaining the water repellency and the oil repellency, may have improved slidability (the water-sliding property that allows for easy removal of the water droplets on the surface) may be obtained.

As can be seen from comparisons among Examples 18 to 20, also, when the ratio of the addition amounts (the blending amounts) of the fluorine source and the silicon source is constant, without being greatly influenced by the addition amount, the water repellency and the oil repellency may be maintained and, simultaneously, the slidability may be improved.

INDUSTRIAL APPLICABILITY

A member of the present invention may be preferably used (A) to clear products exposed to the water or steam such as (i) window glass and a mirror of a vehicle, a ship, an airplane, (ii) goggles and a mask for sports, (iii) an illumination lens, an optical lens, other glass or plastic products, and a film attached to these products; (B) to prevent scaling, fouling, rain-streak-staining of a housing facility, a toilet, a bathroom (a bathroom wall material, a bath tab, bathroom a ceiling material, a bathroom floor material, and a bathroom bench), a wet-area product for kitchen and the like (a kitchen sink and a kitchen wall material), a water storage tank, a lighting fixture, a kitchenware, a tableware, an exhaust fan, the building material, building exterior, building interior, window glass, a vehicle, a machinery equipment, a traffic sign, a tunnel, a bridge, a solar cell cover, a roofing material, and the like; (C) to reduce deterioration in gripping property of a tire for rainy weather, a rubber crawler and the like; (D) to reduce functional deterioration of an antenna, a power line and the like due to the water or snow; (E) to remove the water droplets from a fin of a heat exchanger; or the like.

**Claims**

1. A member having, at least on a surface thereof, a cured layer obtained by curing a curable resin composition, wherein an area within 1 nm in depth from an outermost surface of the cured layer includes
   a fluorine element at 1.0 at% to 10.0 at%, and
   a silicon element at 1.0 at% to 20.0 at%.

2. The member according to claim 1, wherein
   in the area within 1 nm in depth from the outermost surface of the cured layer, an atomic percentage ratio (F/Si) of the fluorine element and the silicon element is 1 or less.

3. The member according to claim 2, wherein
   in the area within 1 nm in depth from the outermost surface of the cured layer, the atomic percentage ratio (F/Si) of the fluorine element and the silicon element is 0.05 to 1.

4. The member according to claim 3, wherein
   in the area within 1 nm in depth from the outermost surface of the cured layer, the atomic percentage ratio (F/Si) of the fluorine element and the silicon element is 0.1 to 0.4.

5. The member according to any one of claims 1 to 4, wherein
   an area over 1 nm to 5 nm or less in depth from the outermost surface of the cured layer includes
   the fluorine element at 1.0 at% to 5.0 at%, and
   the silicon element at 1.0 at% to 15.0 at%.

6. The member according to any one of claims 1 to 5, wherein
   the silicon element is derived from a dimethylsiloxane group.

7. The member according to any one of claims 1 to 6, wherein
   the curable resin composition is a thermally-polymerizable resin composition and/or a photopolymerizable resin composition.

8. The member according to any one of claims 1 to 7, wherein
   the cured layer is obtained by copolymerization of

   (i) a curable resin, and
   (ii) a compound containing a fluorine element having a reactive group for reacting with the curable resin, a compound containing a silicon element having the reactive group for reacting with the curable resin, and/or a compound having the reactive group for reacting with the curable resin and also having the fluorine element and the silicon element in one molecular.

9. The member according to any one of claims 1 to 6, wherein
   the cured layer is obtained by curing the curable resin including (i) the fluorine-containing compound and the silicon-containing compound and/or (ii) the compound containing the fluorine element and the silicon element in one molecular, those compounds being internally added to the curable resin.

10. The member according to claim 9, wherein
    the cured layer is obtained by means of thermal polymerization of the curable resin including (i) the fluorine-containing compound and the silicon-containing compound and/or (ii) the compound containing the fluorine element and the silicon element in one molecular, those compounds being internally added to the curable resin.

## INTERNATIONAL SEARCH REPORT

| International application No. |
| --- |
| PCT/JP2013/004745 |

A. CLASSIFICATION OF SUBJECT MATTER

$C08F290/06(2006.01)i$, $C09D5/00(2006.01)i$, $C09D7/12(2006.01)i$, $C09D183/04$ $(2006.01)i$, $C09D201/00(2006.01)i$

According to International Patent Classification (IPC) or to both national classification and IPC

B. FIELDS SEARCHED

Minimum documentation searched (classification system followed by classification symbols)

$C08F290/06$, $C09D5/00$, $C09D7/12$, $C09D183/04$, $C09D201/00$

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | WO 2012/111286 A1 (Bridgestone Corp.), 23 August 2012 (23.08.2012), entire text; particularly, examples & JP 2012-167185 A & TW 201248321 A | 1-10 |
| P,X | WO 2013/011693 A1 (Bridgestone Corp.), 24 January 2013 (24.01.2013), entire text; particularly, examples & TW 201317304 A | 1-10 |
| P,X | JP 2013-23548 A (Bridgestone Corp.), 04 February 2013 (04.02.2013), entire text; particularly, examples (Family: none) | 1-10 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 November, 2013 (05.11.13) | 19 November, 2013 (19.11.13) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2013/004745

| C (Continuation). DOCUMENTS CONSIDERED TO BE RELEVANT | | |
|---|---|---|
| Category* | Citation of document, with indication, where appropriate, of the relevant passages | Relevant to claim No. |
| A | WO 2011/129015 A1 (Neos Co., Ltd.), 20 October 2011 (20.10.2011), entire text & WO 2011/129426 A & CN 102834425 A & KR 10-2013-0054272 A | 1-10 |
| A | JP 2011-514911 A (Daikin Industries, Ltd.), 12 May 2011 (12.05.2011), entire text & US 2011/0057142 A1 & EP 2240525 A & WO 2009/099241 A1 & CN 101939347 A & KR 10-2010-0130189 A | 1-10 |
| A | JP 2008-19402 A (JSR Corp.), 31 January 2008 (31.01.2008), entire text (Family: none) | 1-10 |
| A | JP 2008-255328 A (Kanto Denka Kogyo Co., Ltd.), 23 October 2008 (23.10.2008), entire text (Family: none) | 1-10 |
| A | JP 2001-151831 A (Fuji Kasei Kogyo Co., Ltd.), 05 June 2001 (05.06.2001), entire text & US 2001/0002416 A1 | 1-10 |
| A | JP 2009-30039 A (Shin-Etsu Chemical Co., Ltd.), 12 February 2009 (12.02.2009), entire text & US 2009/0012220 A1 & EP 2011831 A2 | 1-10 |
| A | JP 2000-144121 A (Ikuo NARUSAWA), 26 May 2000 (26.05.2000), entire text (Family: none) | 1-10 |
| A | JP 11-100532 A (Honny Chemical Co., Ltd.), 13 April 1999 (13.04.1999), entire text (Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002069378 A
- JP 10237430 A
- JP 2009030039 A
- JP 2000144121 A

**Non-patent literature cited in the description**

- Solubility parameter values. Polymer Handbook